# EUROPÄISCHE PATENTSCHRIFT

(11) **EP 4 182 375 B1**
(45) Veröffentlichungstag und Bekanntmachung des Hinweises auf die Patenterteilung: **20.05.2026**
(21) Anmeldenummer: 21745929.6
(22) Anmeldetag: 06.07.2021
(51) Int. Cl.: C08G 65/00, C08G 65/48, C08G 65/18, C08G 59/24, C08F 283/06, C08F 290/14, C09J 171/02

(54) **WIEDERLÖSBARE ZUSAMMENSETZUNGEN AUF BASIS VON POLYACETALEN**
RELEASABLE COMPOSITIONS BASED ON POLYACETALS
COMPOSITIONS DÉTACHABLES À BASE DE POLYACÉTALS

(30) Priorität: 16.07.2020 DE 102020118813
(43) Veröffentlichungstag der Anmeldung: 24.05.2023
(73) Patentinhaber: DELO Industrie Klebstoffe GmbH & Co. KGaA, 86949 Windach (DE)
(72) Erfinder: SÜVEGES, Bastian, 86949 Windach (DE); BORN, Robert, 86949 Windach (DE)
(74) Vertreter: Prinz & Partner mbB
(86) Internationale Anmeldenummer: PCT/EP2021/068572
(87) Internationale Veröffentlichungsnummer: WO 2022/012996

(56) Entgegenhaltungen:
- WO-A1-2019/145420
- US-A1- 2019 119 534

## Beschreibung

### GEBIET DER ERFINDUNG

Die vorliegende Erfindung betrifft härtbare Zusammensetzungen auf Basis von Polyacetalen die nach Aushärtung durch Einwirken von Wasser und/oder Feuchtigkeit wiederlösbar und/oder auflösbar sind.

Darüber hinaus betrifft die Erfindung ein Verfahren zum Ablösen und/oder Auflösen von Fügeverbindungen, Vergüssen und Beschichtungen, die aus den Zusammensetzungen gebildet sind.

### TECHNISCHER HINTERGRUND

Im Stand der Technik sind verschiedene Möglichkeiten bekannt, um Fügeverbindungen wieder zu lösen. Insbesondere bei kostspieligen Bauteilen ist die Ab- oder Auflösbarkeit der Fügeverbindungen von Vorteil, um eine Nachbearbeitung zu ermöglichen.

In manchen Anwendungen wie im 3D-Druck werden für das Erzeugen komplexer additiv gefertigter Aufbauten oftmals Stützstrukturen benötigt. Diese erlauben das Auftragen von härtbaren Massen und lassen sich im Anschluss wieder herauswaschen oder ablösen. Als Material für die Stützstrukturen kommen insbesondere wasserlösliche Polymere, Wachse oder thermoplastische Massen zum Einsatz. Nachteilig bei diesen Materialien ist der geringe Grad an Vernetzung, was zu nachteiligen mechanischen Eigenschaften, insbesondere geringer Kohäsion, führt.

Das Ablösen der Stützstrukturen kann durch unterschiedliche physikalische oder chemische Signale hervorgerufen werden. So können Fügeverbindungen beispielsweise durch Lösungsmittel, Säuren oder Basen chemisch wieder gelöst werden. Dies ist sowohl in Bezug auf die Bauteile als auch unter Umwelt- und Arbeitssicherheitsaspekten nicht von Vorteil.

Alternativ existieren physikalische Methoden zum Lösen von Klebeverbindungen. So lassen sich beispielsweise Massen mit einem hohen Gehalt an Thermoplasten durch Erwärmen über die Glasübergangstemperatur der Masse hinaus in einen Zustand überführen, in dem die Fügepartner durch Schälung von der Masse getrennt werden können. Dies ist oft nicht rückstandsfrei möglich und versagt bei komplexen Bauteilgeometrien.

Aus der US 6 288 170 B1 sind epoxidhaltige Formulierungen bekannt, die neben einem Härter zusätzlich thermisch expandierbare Mikrospheren enthalten. Diese setzen bei erhöhten Temperaturen Gase frei und erlauben so ein Lösen des Fügeverbundes. Nachteilig ist die Notwendigkeit hoher Füllgrade, um ein hohes Maß an Ablösbarkeit zu erzielen. Gleichzeitig zeigen die Mikrospheren geringe Scherstabilitäten, was die Verarbeitbarkeit derartiger Massen negativ beeinflusst.

Aus der EP 1 914 285 A1 sind Klebstoff-Formulierungen bekannt, die durch Anlegen einer elektrischen Spannung von Substraten gelöst werden können. Nachteilig an diesem Ansatz ist, dass die Formulierungen einen hohen Anteil ionischer Flüssigkeiten aufweisen müssen, um wiederlösbar zu sein, was die Formulierungsbreite stark einschränkt. Ferner werden zwingend elektrisch leitfähige Substrate für eine Wiederlösbarkeit des Klebstoffs benötigt.

Die WO 2017/132497 A1 offenbart fluoreszierende photoschaltbare Epoxidmassen auf Coumarinbasis. Die polymerisierten Massen lassen sich durch Bestrahlung mit Wellenlängen von kleiner 300 nm in einen geringer vernetzten Zustand überführen, in dem eine Ablösung möglich ist. Dieser Ansatz erfordert spezielle, nicht kommerziell verfügbare Rohstoffe und erlaubt nur eine geringe Formulierungsbreite. Die nötigen Rohstoffe weisen bedingt durch die Syntheseroute einen hohen Chlorgehalt auf und eignen sich damit nicht für den Einsatz im Elektronikbereich. Zusätzlich wird für eine Wiederablösbarkeit der Massen zwingend ein durchstrahlbares Substrat benötigt.

Formulierungen mit Epoxidharzen, die Acetalbindungen tragen, sind beispielsweise aus der US 5 932 682 A bekannt. Die Formulierungen enthalten Anhydride als Härter und sind für die Verkapselung elektronischer Komponenten vorgesehen. Mischungen acetalhaltiger Epoxide mit einem acetalfreien cylcoaliphatischen Epoxid zeigen nach 1 Woche unter Temperatur- und Feuchtelagerung nur eine moderate Verminderung der Glasübergangstemperatur, ohne sich dabei aufzulösen. Eine Nachbearbeitung von Bauteilen kann daher nur unter hohem Zeitaufwand und Energieeintrag erfolgen. Für eine Auflösung der Masse werden zwingend organische Lösungsmittel benötigt.

Die US 2017 0 298 163 A1 offenbart Formulierungen mit acetalfunktionellen Vernetzern, die (Meth)Acrylatgruppen tragen. Es werden ausschließlich linear aufgebaute Vernetzer beschrieben. Die Formulierungen weisen generell eine Glasübergangstemperatur von weniger als 50 °C auf und sind für die Anwendung als druckempfindliche Klebstoffe vorgesehen. Durch den Einsatz höchstens difunktioneller (Meth)Acrylate auf Basis von Acetalen können keine Massen mit hoher Beständigkeit und/oder Glasübergangstemperatur formuliert werden. Das druckempfindliche Polymer eignet sich deswegen nicht für Prozesse in der Halbleiterindustrie.

Aus der wissenschaftlichen Publikation von M. lonescu, S. Sinharoy und Z. S. Petrović, "Polyacetal Polyols for Polyurethanes" aus dem Journal of Polymers and the Environment, 2009, 17, 123-130, ist der Aufbau von hydroxyfunktionellen Polyacetalen als Härter zur Herstellung von Polyurethanen bekannt. Die Polyacetale werden dabei als biologisch und/oder in der Gegenwart von Säuren abbaubar beschrieben. Eine Synthese von Polyacetalen, die anstelle von Alkoholen andere funktionelle Gruppen tragen und beispielsweise in radikalisch oder kationisch polymerisierbare Massen eingebunden werden können, wird in der Publikation nicht beschrieben. Ferner werden weder Aussagen in Bezug auf die Bedingungen getroffen, noch die notwendigen Anteile derartiger Verbindungen in Klebstoffmassen angegeben, um ein Ablösen der Massen von Substraten zu erreichen. Außerdem lassen sich die über die beschriebene Synthese erhaltenen Polyacetale aufgrund der in den Massen enthaltenen Katalysatoren auf Aminbasis nicht für die Formulierung lagerstabiler Massen einsetzen.

Die US 2019/0119534 A1 beschreibt die Umsetzung von Vinylethern mit monovalenten Carbonsäuren oder Alkoholen zu Polyacetalen. In der Offenlegung werden durch Zugabe thermoplastischer Materialien thermisch wiederlösbare Massen formuliert. Diese weisen Erweichungspunkte von 100 °C oder höher auf. Die Massen sind jedoch ausschließlich warmhärtbar und weisen schlechte kohäsive Eigenschaften auf. Eine Wiederablösbarkeit durch Feuchtigkeitseinwirkung ist nicht vorgesehen.

Die WO 2019/145420 A1 offenbart härtbare Zusammensetzungen umfassend mindestens ein Silangruppen- und/oder Isocyanatgruppen-haltiges organisches Polymer, mindestens eine Acetalgruppen-haltige Verbindung mit einem Molekulargewicht von mindestens 280 g/mol und mindestens einen basischen Katalysator. Unter Einwirkung von Feuchtigkeit härtet die Zusammensetzung zu einem elastischen Material aus.

Nachteilig an den im Stand der Technik beschriebenen wiederlösbaren Zusammensetzungen ist, dass diese entweder harsche Bedingungen und/oder längere Zeiträume zur Wiederauflösung benötigen, nicht rückstandsfrei ablösbar sind oder hohe Anteile an Verbindungen enthalten, die nicht in das Netzwerk der Zusammensetzung einpolymerisieren.

### ZUSAMMENFASSUNG DER ERFINDUNG

Der Erfindung liegt die Aufgabe zugrunde, die Nachteile der aus dem im Stand der Technik bekannten Zusammensetzungen zu vermeiden und härtbare Zusammensetzungen bereitzustellen, die nach Aushärtung bei niedrigen Temperaturen im wässrigen Medium rückstandsfrei wieder ablösbar und/oder auflösbar sind.

Ferner sollen die erfindungsgemäßen Zusammensetzungen nach der Aushärtung ein breites Spektrum an mechanischen Eigenschaften aufweisen. Insbesondere sollen mit den Zusammensetzungen variable Glasübergangstemperaturen erreicht werden können.

Diese Aufgaben werden erfindungsgemäß durch eine härtbare Zusammensetzung nach Anspruch 1 gelöst.

Vorteilhafte Ausführungsformen der erfindungsgemäßen Zusammensetzung sind in den Unteransprüchen angegeben, die wahlweise miteinander kombiniert werden können.

Die Erfindung betrifft ferner ein Verfahren zum Ablösen und/oder Auflösen von Fügeverbindungen, Vergüssen und Beschichtungen die aus den erfindungsgemäßen Zusammensetzungen gebildet sind.

Gegenstand der Erfindung ist weiter die Verwendung der erfindungsgemäßen Zusammensetzung als Klebstoff oder Dichtstoff für das Verkleben, Vergießen, Abdichten oder Beschichten von wieder zu lösenden Substraten.

Die erfindungsgemäßen Zusammensetzungen eignen sich insbesondere für temporäre Fügeanwendungen.

Die erfindungsgemäße härtbare Zusammensetzung ist bei Raumtemperatur flüssig und kann durch verschiedene Härtungsmechanismen wie beispielsweise aktinische Strahlung und/oder Wärme gehärtet werden.

Die Zusammensetzung umfasst mindestens die folgenden Komponenten:
A) Mindestens eine härtbare Harzkomponente, die aus der aus epoxidhaltigen Verbindungen, Oxetanen, Vinylethern, (Meth)acrylaten und Kombinationen davon bestehenden Gruppe ausgewählt ist;
B) Mindestens einen Härter und/oder einen Initiator für die Polymerisation der härtbaren Harzkomponente; und
C) Mindestens eine Polyacetal-verbrückte Harzkomponente, die erhältlich ist durch Umsetzen mindestens eines wenigstens difunktionellen Vinylethers (c1) mit mindestens einem wenigstens difunktionellen Alkohol (c2), unter Bildung eines Polyacetal-Zwischenprodukts mit mehr als zwei endständigen Vinylethergruppen oder mehr als zwei endständigen Hydroxylgruppen, und
   a) Umsetzen des Polyacetal-Zwischenprodukts, das mehr als zwei endständige Vinylethergruppen aufweist, mit wenigstens einer gemischtfunktionellen Verbindung (c3), die wenigstens eine Hydroxylgruppe oder eine Amingruppe sowie wenigstens eine weitere funktionelle Gruppe der Harzkomponente (A) oder eine damit polymerisierbare Gruppe aufweist; oder
   b) Umsetzen des Polyacetal-Zwischenprodukts, das mehr als zwei endständige Hydroxylgruppen aufweist, mit einem gegenüber Hydroxylgruppen reaktiven Linker, sowie weitere Umsetzung mit der gemischtfunktionellen Verbindung (c3) oder einer wenigstens difunktionellen Harzkomponente (A); oder
   c) Umsetzen des Polyacetal-Zwischenprodukts, das mehr als zwei endständige Hydroxylgruppen aufweist mit einer gemischtfunktionellen Verbindung (c3), die wenigstens eine Isocyanatgruppe und eine weitere funktionelle Gruppe der Harzkomponente (A) oder eine damit polymerisierbare Gruppe aufweist,
   wobei die polyacetalverbrückte Harzkomponente (C) in der Zusammensetzung in einem Anteil von mindestens 20 Gew.-% vorliegt, bezogen auf das Gesamtgewicht der Zusammensetzung.

Bevorzugt umfasst die Zusammensetzung eine Harzkomponente (A) mit einer epoxidhaltigen Verbindung und/oder einem Oxetan sowie einen Härter (B1) aus der Gruppe der Amine und/oder Anhydride.

Alternativ kann die Zusammensetzung eine epoxidhaltige Verbindung, ein Oxetan und/oder einen Vinylether als Harzkomponente (A) sowie einen Initiator für die kationische Polymerisation umfassen.

Gemäß einer Ausführungsform kann die Zusammensetzung eine radikalisch härtbare (Meth)acrylatverbindung als Harzkomponente (A) und einen Initiator für die radikalische Polymerisation umfassen, entweder alleine oder in Kombination mit den vorgenannten Harzkomponenten und Härtern.

Gemäß einer weiteren Ausführungsform kann die Harzkomponente (A) somit eine epoxidhaltige Verbindung und/oder ein Oxetan sowie eine radikalisch strahlungshärtbare Verbindung umfassen, oder eine Hybridverbindung, die Epoxidgruppen und radikalisch strahlungshärtbare Gruppen aufweist. Ferner kann die Zusammensetzung einen Härter aus der Gruppe der Amine und/oder Anhydride sowie zusätzlich einen Initiator für die radikalische Polymerisation umfassen.

Die polyacetalverbrückte Harzkomponente (C) weist vorzugsweise ein Molekulargewicht im Bereich von 2000 - 20.000 g/mol auf, bevorzugt von 2000 - 8000 g/mol. Das Molekulargewicht kann nach ISO 16014-2 bestimmt werden.

Erfindungsgemäß liegt die polyacetalverbrückte Harzkomponente (C) in der Zusammensetzung in einem Anteil von mindestens 20 Gew.-% vor, bevorzugt in einem Anteil von mindestens 40 Gew.-% und besonders bevorzugt mindestens 50 Gew.-%, jeweils bezogen auf das Gesamtgewicht der Zusammensetzung.

Die Zusammensetzung kann ferner einen Beschleuniger aus der Gruppe der Treibmittel und organischen Säuren umfassen, der die Ablösbarkeit oder Wiederauflösbarkeit der Zusammensetzung unter Einwirkung von Feuchtigkeit und Temperatur begünstigt.

Die Erfindung umfasst ferner ein Verfahren zum Herstellen und Wiederauflösen eines Fügeverbundes, eines Vergusses, einer Stützstruktur oder einer Beschichtung, mit den folgenden Schritten:
eine erfindungsgemäße Zusammensetzung wird auf ein erstes Substrat aufgebracht sowie wahlweise mit einem weiteren Substrat unter Bildung einer Klebefuge in Kontakt gebracht;
die Masse wird unter Einwirkung von Wärme und/oder Licht gehärtet, wodurch ein gehärteter Fügeverbund, ein gehärteter Verguss, eine gehärtete Stützstruktur oder eine gehärtete Beschichtung gebildet wird; und
Einwirken lassen von Feuchtigkeit auf die gehärtete Masse während einer vorbestimmten Zeitdauer und bei einer vorbestimmten Temperatur, wodurch die gehärtete Masse aufgelöst und/oder von dem ersten und wahlweise dem zweiten Substrat abgelöst wird.

Gegenstand der Erfindung ist ferner die Verwendung der erfindungsgemäßen Zusammensetzung als temporäres Stützmaterial für additiv gefertigte Strukturen.

### AUSFÜHRLICHE BESCHREIBUNG BEVORZUGTER AUSFÜHRUNGSFORMEN

Die Erfindung wird im Folgenden anhand von bevorzugten Ausführungsformen ausführlich und beispielhaft beschrieben, die jedoch nicht in einem einschränkenden Sinn verstanden werden sollen.

"Flüssig" bedeutet im Sinne der Erfindung, dass bei 23 °C der durch Viskositätsmessung bestimmte Verlustmodul G" größer als der Speichermodul G' der betreffenden Masse ist.

Die Zusammensetzungen gelten als wiederablösbar, wenn sich diese nach Aushärtung unter Einwirkung von Feuchtigkeit und Temperatur rückstandsfrei von einem Substrat lösen.

### Die Zusammensetzungen gelten auflösbar, wenn sich diese nach Aushärtung unter Einwirkung von Feuchtigkeit und Temperatur vollständig auflösen

Soweit der unbestimmte Artikel "ein" oder "eine" verwendet wird, ist damit auch die Pluralform "ein oder mehrere" umfasst, soweit diese nicht ausdrücklich ausgeschlossen wird.

"Mindestens difunktionell" bedeutet, dass pro Molekül zwei oder mehr Einheiten der jeweils genannten funktionellen Gruppe enthalten sind.

"Gemischt funktionell" bedeutet, dass pro Molekül mindestens zwei verschiedene funktionelle Gruppen enthalten sind.

Alle im Folgenden aufgeführten Gewichtsanteile beziehen sich jeweils auf das Gesamtgewicht der Zusammensetzung, soweit nichts anderes angegeben ist.

### Komponente (A): Harz

Die Harzkomponente (A) umfasst erfindungsgemäß mindestens eine härtbare, vorzugsweise mindestens eine mindestens difunktionelle Harzkomponente, die aus der aus epoxidhaltigen Verbindungen, Oxetanen, Vinylethern, (Meth)acrylaten und Kombinationen davon bestehenden Gruppe ausgewählt ist.

### Epoxidhaltige Verbindungen (A1)

Die epoxidhaltige Verbindung (A1) in den erfindungsgemäßen Massen umfasst bevorzugt eine oder mehrere mindestens difunktionelle epoxidhaltige Verbindungen. "Mindestens difunktionell" bedeutet hier, dass die epoxidhaltige Verbindung mindestens zwei Epoxidgruppen enthält. Die Komponente (A1) kann beispielsweise cycloaliphatische Epoxide, aromatische und aliphatische Glycidylether, Glycidylester oder Glycidylamine und Mischungen davon umfassen.

Difunktionelle cycloaliphatische Epoxidharze sind im Stand der Technik bekannt und beinhalten Verbindungen, die sowohl eine cycloaliphatische Gruppe als auch mindestens zwei Oxiranringe tragen. Beispielhafte Vertreter sind 3-Cyclohexenylmethyl-3-cyclohexylcarboxylatdiepoxid, 3,4-Epoxycyclohexylalkyl-3',4'-epoxycyclohexancarboxylat, 3,4-Epoxy-6-methylcyclohexylmethyl-3',4'-epoxy-6-methylcyclohexancarboxylat, Vinylcyclohexendioxid, Bis(3,4-Epoxycyclohexylmethyl)adipat, Dicyclopentadiendioxid und 1,2-Epoxy-6-(2,3-epoxypropoxy)hexahydro-4,7-methanindan, sowie Mischungen davon.

Aromatische Epoxidharze können in den erfindungsgemäßen Massen ebenso verwendet werden. Beispiele für aromatische Epoxidharze sind Bisphenol-A-Epoxidharze, Bisphenol-F-Epoxidharze, Phenol-Novolak-Epoxidharze, Cresol-Novolak-Epoxidharze, Biphenylepoxidharze, 4,4'-Biphenylepoxidharze, Divinylbenzoldioxid, 2-Glycidylphenylglycidylether, Naphthalindioldiglycidylether, Glycidylether von Tris(hydroxyphenyl)-methan und Glycidylether von Tris(hydroxyphenyl)-ethan, sowie Mischungen davon. Ferner können auch alle vollständig oder teilweise hydrierten Analoga aromatischer Epoxidharze eingesetzt werden.

Auch mit epoxidhaltigen Gruppen substituierte Isocyanurate und andere heterocyclische Verbindungen können in den erfindungsgemäßen Massen verwendet werden. Beispielhaft seien Triglycidylisocyanurat und Monoallyldiglycidylisocyanurat genannt.

Außerdem können auch polyfunktionelle Epoxidharze aller genannten Harzgruppen, zäh elastifizierte Epoxidharze sowie Gemische verschiedener Epoxidharze in den erfindungsgemäßen Massen eingesetzt werden.

Ebenfalls im Sinne der Erfindung ist eine Kombination mehrerer epoxidhaltiger Verbindungen, von denen mindestens eine di- oder höherfunktionell ist.

Zusätzlich zu den mindestens difunktionellen epoxidhaltigen Verbindungen können auch monofunktionelle Epoxide als reaktive Verdünner verwendet werden.

Beispiele für kommerziell erhältliche epoxidhaltige Verbindungen sind Produkte, die unter den Handelsnamen CELLOXIDE^{™} 2021P, CELLOXIDE^{™} 8000 von Daicel Corporation, Japan, als EPIKOTE^{™} RESIN 828 LVEL, EPIKOTE^{™} RESIN 166, EPIKOTE^{™} RESIN 169 von Momentive Specialty Chemicals B.V., Niederlande, als Epilox^{™}-Harze der Produktreihen A, T und AF von Leuna Harze, Deutschland, oder als EPICLON^{™} 840, 840-S, 850, 850-S, EXA850CRP, 850-LC von DIC K.K., Japan, Omnilane 1005 und Omnilane 2005 von IGM Resins B.V., Syna Epoxy 21 und Syna Epoxy 06 von Synasia Inc., TTA21, TTA26, TTA60 und TTA128 von Jiangsu Tetra New Material Technology Co. Ltd., verfügbar sind.

### Oxetane (A2)

Anstelle oder zusätzlich zur epoxidhaltigen Verbindung (A1) können vorzugsweise mindestens difunktionelle oxetanhaltige Verbindungen (A2) in den Massen als kationisch härtbare Komponente (A) eingesetzt werden. Verfahren zur Herstellung von Oxetanen sind insbesondere aus der US 2017/0198093 A1 bekannt.

Beispiele für kommerziell erhältliche Oxetane sind Bis(1-ethyl-3-oxetanyl-methyl)ether (DOX), 3-Allyloxymethyl-3-ethyloxetane (AQX), 3-Ethyl-3-[(phenoxy)-methyloxetane (POX), 3-Ethyl-3-hydroxymethyl-oxetane (OXA), 1,4-Bis[(3-ethyl-3-oxetanylmethoxy)methyl]benzol (XDO), 3-Ethyl-3-[(2-ethylhexyloxy)methyl]oxetan (EHOX). Die genannten Oxetane sind von der Firma TOAGOSEI CO., LTD. kommerziell verfügbar.

### Vinylether (A3):

Anstelle oder zusätzlich zu den Komponenten (A1) und (A2) können auch Vinylether (A3) als kationisch härtbare Komponenten in den erfindungsgemäßen Massen eingesetzt werden. Bevorzugt werden mindestens difunktionelle Vinylether verwendet. Geeignete Vinylether sind Trimethylolpropan-Trivinylether, Ethylenglykol-Divinylether, Triethylenglykoldivinylether (DVE-3), 1,4-Butandioldivinylether (BDDVE), 1,4-Cyclohexandimethanoldivinylether (CHDM-di), 1,2,3-Tris(vinyloxy)propane, 1,3,5-Tris[(2-vinyloxy)ethoxy]benzol, Tris[4-(vinyloxy)butyl] 1,2,4-benzenetricarboxylate, 1,3,5-Tris(2-vinyloxyethyl)-1,3,5-triazin, 1,3,5-Cyclohexantrimethanoltrivinylether, 1,1,1-Tris-4-[2-(vinyloxy)ethoxy]phenylethan, Tetrakis(vinyloxymethyl)methan und cyclische Vinylether sowie deren Mischungen. Ferner können Vinylether polyfunktioneller Alkohole eingesetzt werden.

### Radikalisch härtbare Verbindungen (A4):

Anstelle oder zusätzlich zu den Komponenten (A1) bis (A3) können auch weitere radikalisch härtbare Verbindungen (A4) als Harzkomponente in den Massen zum Einsatz kommen, wobei die radikalisch härtbare Verbindung (A4) eine Verbindung aus der aus (Meth)acrylaten bestehenden Gruppe umfasst. Diese sind in ihrer chemischen Struktur nicht weiter eingeschränkt, wobei sowohl aliphatische als auch aromatische (Meth)Acrylate verwendet werden können. Als (Meth)Acrylate werden hier und im Folgenden sowohl die Derivate der Acrylsäure als auch der Methacrylsäure sowie Kombinationen und Mischungen davon bezeichnet. Die radikalisch härtbaren Verbindungen (A4) sind bevorzugt strahlungshärtbar.

Die (Meth)Acrylate können monofunktionell oder mindestens difunktionell sein. Bevorzugt ist die radikalisch durch Einwirken von Wärme oder Strahlung härtbare (Meth)Acrylatverbindung mindestens difunktionell. Geeignet sind beispielsweise die folgenden radikalisch härtbaren Verbindungen: Isobornylacrylat, Stearylacrylat, Tetrahydrofurfurylacrylat, Cyclohexylacrylat, 3,3,5-Trimethylcyclohexanolacrylat, Behenylacrylat, 2-Methoxyethylacrylat und andere ein- oder mehrfach alkoxylierte Alkylacrylate, Isobutylacrylat, Isooctylacrylat, Laurylacrylat, Tridecylacrylat, Isostearylacrylat, 2-(o-Phenylphenoxy)ethylacrylat, Acryloylmorpholin, N,N-Dimethylacrylamid, 4-Butandioldiacrylat, 1,6-Hexandioldiacrylat, 1,10-Decandioldiacrylat, Tricyclodecandimethanoldiacrylat, Dipropylenglycoldiacrylat, Tripropylenglycoldiacrylat, Polybutadiendiacrylat, Cyclohexandimethanoldiacrylat, Diurethanacrylate von monomeren, oligomeren oder polymeren Diolen und Polyolen, Trimethylolpropantriacrylat (TMPTA), und Dipentaerythritolhexaacrylat (DPHA), und Kombinationen davon. Auch von mehrfach verzweigten oder dendrimeren Alkoholen abgeleitete höherfunktionelle Acrylate können vorteilhaft verwendet werden

Die analogen Methacrylate sind ebenfalls im Sinne der Erfindung.

Weiterhin eignen sich auch strahlungshärtbare Verbindungen (A4) mit Allylgruppen für den Einsatz in der Harzkomponente, wie beispielsweise 1,3,5-Triazin-2,4,6(1H,3H,5H)-trion, das kommerziell als TAICROS^{®} erhältlich ist. Auch unhydrierte Polybutadiene mit freien Doppelbindungen wie beispielsweise die Poly BD^{®}-Typen können als strahlungshärtende Verbindung (A4) eingesetzt werden.

Als höhermolekulare strahlungshärtbare Verbindung können Urethanacrylate auf Basis von Polyestern, Polyethern, Polycarbonatdiolen und/oder (hydrierten) Polybutadiendiolen als Komponente (A4) zum Einsatz kommen.

### Komponente (B): Härter und/oder Initiator:

Die Massen enthalten neben der härtbaren Harzkomponente (A) einen Härter und/oder einen Initiator zur Polymerisation der Komponente (A). Der Begriff "Polymerisation" soll hier auch die Vernetzung der Komponente (A) mit umfassen. Die Härter sind dabei in ihrer chemischen Natur nicht weiter eingeschränkt und umfassen beispielsweise eine oder mehrere der im Folgenden angegebenen Verbindungen:

### Stickstoffhaltige Verbindungen (B1):

Als Härter (B) für epoxidhaltige Verbindungen (A1) können beispielsweise stickstoffhaltige Verbindungen (B1) verwendet werden.

Beispiele für geeignete stickstoffhaltige Verbindungen umfassen Amine, insbesondere aliphatische Polyamine, arylaliphatische Polyamine, cycloaliphatische Polyamine, aromatische Polyamine und heterocyclische Polyamine, sowie Imidazole, Cyanamide, Polyharnstoffe, Mannich Basen, Polyetherpolyamine, Polyaminoamide, Phenalkamine, Sulfonamide, Aminocarbonsäuren oder Kombinationen der genannten Substanzklassen. Ebenso können Reaktionsprodukte aus Epoxiden und/oder Anhydriden und den voranstehend genannten stickstoffhaltigen Verbindungen als Härter (B) eingesetzt werden.

### Carbonsäureanhydride (B2)

Als Härter (B) für epoxidhaltige Verbindungen (A1) können beispielsweise auch Carbonsäureanhydride (B2) verwendet werden.

Besonders bevorzugt sind die Anhydride zweiprotoniger Carbonsäuren und aromatischer vierprotoniger Carbonsäuren, sowie Mischungen davon.

Spezifische Beispiele für Anhydride, die in den vorliegenden Massen als Härter eingesetzt werden können, umfassen die Anhydride zweiprotoniger Säuren, wie zum Beispiel Phthalsäureanhydrid (PSA), Bernsteinsäureanhydrid, Octenylbernsteinsäureanhydrid (OSA), Pentadodecenylbernsteinsäureanhydrid und andere Alkenylbernsteinsäureanhydride, Maleinsäureanhydrid (MA), Itaconsäureanhydrid (ISA), Tetrahydrophthalsäureanhydrid (THPA), Hexahydrophthalsäureanhydrid (HHPA), Methyltetrahydrophthalsäureanhydrid (MTHPA), Methylhexahydrophthalsäureanhydrid (MHHPA), Nadinsäureanhydrid, 3,6-Endomethylentetrahydrophthalsäureanhydrid, Methyl-endomethylentetrahydrophthalsäureanhydrid (METH, NMA), Tetrabromphthalsäureanhydrid und Trimellitsäureanhydrid, sowie die Anhydride aromatischer vierprotoniger Säuren, wie zum Beispiel Biphenyltetracarbonsäuredianhydride, Naphthalintetracarbonsäuredianhydride, Diphenylethertetracarbonsäuredianhydride, Butantetracarbonsäuredianhydride, Cyclopentantetracarbonsäuredianhydride, Pyromellitsäureanhydride und Benzophenontetracarbonsäuredianhydride. Diese Verbindungen können allein oder in Kombinationen von zwei oder mehreren davon verwendet werden.

Die bevorzugten Anhydride zur Verwendung als Härter (B2) sind beispielsweise unter folgenden Handelsnamen kommerziell erhältlich. MHHPA beispielsweise unter den Handelsnamen HN-5500 (Hitachi Chemical Co., Ltd.) und MHHPA (Dixie Chemical Company, Inc.); METH unter den Handelsnamen NMA (Dixie Chemical Company, Inc.), METH/ES (Polynt S.p.A.) und MHAC (Hitachi Chemical Co., Ltd.).

### Thiole (B3)

Als Härter (B) für epoxidhaltige Verbindungen (A1) können auch thiolhaltige Verbindungen (B3) mit mindestens zwei Thiolgruppen (-SH) im Molekül verwendet werden.

Die Thiole sind dabei strukturell nicht weiter eingeschränkt. Bevorzugt werden primäre oder sekundäre Thiole auf Basis aliphatischer oder aromatischer Verbindungen eingesetzt. Auch Polythioetheracetale wie sie in der WO2019082962A1 offenbart werden sind geeignet.

Bevorzugt ist das mindestens difunktionelle Thiol aus der Gruppe ausgewählt, die aus esterbasierten Thiolen, Polyethern mit reaktiven Thiolgruppen, Polythioethern, Polythioetheracetalen, Polythioetherthioacetalen, Polysulfiden, thiolterminierten Urethanen, Thiolderivaten von Isocyanuraten und Glycoluril sowie Kombinationen davon besteht.

Beispiele für kommerziell erhältliche esterbasierte Thiole auf Basis der 2-Mercaptoessigsäure umfassen Trimethylolpropan-trimercaptoacetat, Pentaerythritoltetramercaptoacetat und Glycol-dimercaptoacetat, die unter den Markennamen Thiocure^{™} TMPMA, PETMA und GDMA von der Firma Bruno Bock verfügbar sind.

Weitere Beispiele für kommerziell erhältliche esterbasierte Thiole umfassen Trimethylolpropan-tris(3-mercaptopropionat), Pentaerythritol-tetrakis(3-mercaptobutylat), Glykol-di(3-mercaptopropionat) und Tris[2-(3-mercaptopropionyloxy)ethyl]isocyanurat, die unter den Markennamen Thiocure^{™} TMPMP, PETMP, GDMP und TEMPIC von der Firma Bruno Bock verfügbar sind.

Beispiele für kommerziell verfügbare Thioether umfassen DMDO (1,8-Dimercapto-3,6-dioxaoctane), erhältlich von der Firma Arkema S.A., DMDS (Dimercaptodiethylsulfide) und DMPT (2,3-Di((2-mercaptoethyl)thio)-1-propan-thiol), beide erhältlich von der Firma Bruno Bock.

Besonders bevorzugt ist in der erfindungsgemäßen Masse eine Verwendung von Tris(3-mercaptopropyl)isocyanurat (TMPI) als trifunktionelles esterfreies Thiol.

Bevorzugt liegt das mindestens difunktionelle Thiol (B3) in der erfindungsgemäßen Masse in einem Anteil von 10 bis 80 Gew.-% vor, bevorzugt 15 bis 70 Gew.-%, jeweils bezogen auf das Gesamtgewicht aller Komponenten.

### Photoinitiatoren für die kationische Polymerisation (B4)

Die erfindungsgemäßen Massen können einen Photoinitiator für die kationische Polymerisation (B4) enthalten. Dieser kann durch aktinische Strahlung aktiviert werden und umfasst beispielsweise Initiatoren auf Metalloceniumbasis und/oder Oniumverbindungen.

Eine Übersicht über verschiedene Metalloceniumsalze wird in der EP 0 542 716 B1 offenbart. Als unterschiedliche Anionen der Metalloceniumsalze seien beispielhaft HSO₄⁻, PF₆⁻, SbF₆⁻, AsF₆⁻, Cl⁻, Br⁻, I⁻, ClO₄⁻, PO₄⁻, SO₃CF₃⁻, OTs⁻(Tosylat), Aluminate und Borat-Anionen, wie etwa BF₄⁻ und B(C₆F₅)₄⁻, angeführt.

Bevorzugt ist der Photoinitiator auf Basis einer Metalloceniumverbindung aus der Gruppe der Ferroceniumsalze ausgewählt.

Bevorzugte Oniumverbindungen sind aus der Gruppe der Arylsulfoniumsalze und der Aryliodoniumsalze, und Kombinationen davon ausgewählt und sind im Stand der Technik beschrieben.

Kommerziell als photolatente Säuren verfügbare Photoinitiatoren auf Triarylsulfoniumbasis sind unter den Markennamen Chivacure 1176, Chivacure 1190 von der Firma Chitech, Irgacure 290, Irgacure 270, Irgacure GSID 26-1 von der Firma BASF, Speedcure 976 und Speedcure 992 von Lambson, TTA UV-692, TTA UV-694 von der Firma Jiangsu Tetra New Material Technology Co., Ltd. oder UVI-6976 und UVI-6974 von der Firma Dow Chemical Co. erhältlich.

Kommerziell als photolatente Säuren verfügbare Photoinitiatoren auf Diaryliodoniumbasis sind u.a. unter den Markennamen UV1242 oder UV2257 von der Firma Deuteron und Bluesil 2074 von der Firma Bluestar erhältlich.

Die in den erfindungsgemäßen Massen eingesetzten Photoinitiatoren (C) sind vorzugsweise durch Bestrahlen mit aktinischer Strahlung einer Wellenlänge von 200 bis 480 nm aktivierbar.

### Thermische Initiatoren für die kationische Polymerisation (B5)

Zusätzlich oder an Stelle des Photoinitiators (B4) können die erfindungsgemäßen Massen auch einen thermischen Initiator für die kationische Polymerisation enthalten. Als thermische Säurebildner sind beispielsweise quartäre N-Benzylpyridiniumsalze und N-Benzylammoniumsalze geeignet, wie sie in der EP 0 343 690 A2 oder WO 2005 097 883 A2 offenbart werden. Daneben können auch thermisch latente Sulfoniumsalze, wie in der WO 2019 043 778 A1 beschrieben, als Säurebildner zum Einsatz kommen.

Kommerziell verfügbare Produkte sind unter den Bezeichnungen K-PURE CXC-1614 oder K-PURE CXC-1733 von King Industries Inc.; SAN-AID SI-80L und SAN-AID SI-100L von der Firma SAN-SHIN Chemical Industry Co. Ltd, erhältlich.

Darüber hinaus können verschiedene Metallchelatkomplexe auf Basis von Titan oder Aluminium als wärmelatente Säuren zum Einsatz kommen

### Photoinitiatoren für die radikalische Polymerisation (B6)

Die erfindungsgemäßen Massen können ferner einen Photoinitiator für die radikalische Polymerisation (B6) enthalten.

Als Photoinitiatoren können die üblichen, im Handel erhältlichen Verbindungen eingesetzt werden, wie beispielsweise α-Hydroxyketone, Benzophenon, α,α'-Diethoxyacetophenon, 4,4-Diethylaminobenzophenon, 2,2-Dimethoxy-2-phenyl-acetophenon, 4-Isopropylphenyl-2-hydroxy-2-propylketon, 1-Hydroxy-cyclohexylphenylketon, Isoamyl-p-dimethylaminobenzoat, Methyl-4-dimethyl-aminobenzoat, Mehtyl-o-benzoylbenzoat, Benzoin, Benzoinethylether, Benzoinisopropylether, Benzoinisobutylether, 2-Hydroxy-2-methyl-1-phenyl-propan-1-on, 2-Isopropylthioxanthon, Dibenzosuberon, 2,4,6-Trimethylbenzoyldiphenylphosphinoxid und Bisacylphosphinoxide, wobei die genannten Photoinitiatoren allein oder in Kombination von zwei oder mehreren der genannten Verbindungen verwendet werden können.

Als UV-Photoinitiatoren können beispielsweise die IRGACURE^{™}-Typen von BASF SE eingesetzt werden, so beispielsweise die Typen IRGACURE 184, IRGACURE 500, IRGACURE 1179, IRGACURE 2959, IRGACURE 745, IRGACURE 651, IRGACURE 369, IRGACURE 907, IRGACURE 1300, IRGACURE 819, IRGACURE 819DW, IRGACURE 2022, IRGACURE 2100, IRGACURE 784, IRGACURE 250, IRGACURE TPO, IRGACURE TPO-L.

Ferner sind die DAROCUR^{®}-Typen von BASF SE verwendbar, so beispielsweise die Typen DAROCUR MBF, DAROCUR 1173, DAROCUR TPO und DAROCUR 4265.

Der in den erfindungsgemäßen Massen als Komponente (B5) einsetzbare Photoinitiator ist vorzugsweise durch aktinische Strahlung einer Wellenlänge von 200 bis 400 nm aktivierbar, besonders bevorzugt von 250 bis 365 nm.

### Thermische Initiatoren für die radikalische Polymerisation (B7)

Als thermische Initiatoren können insbesondere Peroxyverbindungen vom Typ der Perester, der Diacylperoxide, der Peroxy(di)carbonate und/oder der Hydroperoxide in den erfindungsgemäßen Massen eingesetzt werden. Bevorzugt werden Hydroperoxide verwendet. Als besonders bevorzugte Peroxide kommen Cumolhydroperoxid, tert-Amylperoxy-2-ethylhexanoat und Di-(4-tert-butyl-cyclohexyl)-peroxydicarbonat zum Einsatz.

Das Peroxid (B7) ist, bezogen auf Gesamtgewicht der Masse, in einem Anteil von 0,1 bis 10, bevorzugt 0,5 - 5 und besonders bevorzug 1 - 3 Gew.-% enthalten.

### Komponente (C): Polyacetalverbrückte Harzkomponente

Neben dem Harz (A), dem Härter und/oder Polymerisationsinitiator (B) enthalten die erfindungsgemäßen Massen die Komponente (C), welche mindestens eine Polyacetal-verbrückte Harzkomponente umfasst. Diese ist in den erfindungsgemäßen Massen wesentlich und erlaubt eine Ab- und/oder Auflösung der gehärteten Massen in Gegenwart von Feuchtigkeit. Gleichzeitig erlaubt die Komponente (C), dass die gehärteten Massen ein breites mechanisches Spektrum aufweisen können und beispielsweise Nachteile in Bezug die Kohäsion der gehärteten Masse und/oder hohe Viskositäten der flüssigen härtbaren Masse vermieden werden können.

Die Komponente (C) ist erfindungsgemäß eine nicht-lineare Polyacetal-verbrückte Harzkomponente, die erhältlich ist durch Umsetzen mindestens eines wenigstens difunktionellen Vinylethers (c1) mit mindestens einem wenigstens difunktionellen Alkohol (c2), unter Bildung eines Polyacetal-Zwischenprodukts mit mehr als zwei endständigen Vinylethergruppen oder mehr als zwei endständigen Hydroxylgruppen, und
(a) Umsetzen des Polyacetal-Zwischenprodukts, das mehr als zwei endständige Vinylethergruppen aufweist, mit wenigstens einer gemischtfunktionellen Verbindung (c3), die wenigstens eine Hydroxylgruppe oder eine Amingruppe sowie wenigstens eine weitere funktionelle Gruppe der Harzkomponente (A) oder einer damit polymerisierbaren Gruppe aufweist; oder
(b) Umsetzen des Polyacetal-Zwischenprodukts, das mehr als zwei endständige Hydroxylgruppen aufweist, mit einem gegenüber Hydroxylgruppen reaktiven, wahlweise mindestens difunktionellen Linker, beispielsweise einem Linker, der aus der Gruppe der Carbonsäureanhydride, der mindestens difunktionellen Carbonsäurehalogenide und mindestens difunktionellen Isocyanaten ausgewählt ist, sowie weitere Umsetzung mit der gemischtfunktionellen Verbindung (c3) oder einer difunktionellen Harzkomponente (A); oder
(c) Umsetzen des Polyacetal-Zwischenprodukts, das mehr als zwei endständige Hydroxylgruppen aufweist mit einer gemischtfunktionellen Verbindung (c3), die wenigstens eine Isocyanatgruppe und eine weitere funktionelle Gruppe der Harzkomponente (A) oder einer damit polymerisierbaren Gruppe aufweist

Falls als Harzkomponente (A) beispielsweise ein Epoxidharz oder ein Oxetanharz eingesetzt wird, weist die Komonente (C) ebenfalls Epoxidgruppen und/oder Oxetangruppen auf. Falls die Harzkomponente (A) strahlungshärtbare (Meth)acrylatgruppen enthält, kann auch die Komponente (C) solche (Meth)acrylatgruppen aufweisen. Falls Harzkomponenten (A) auf Basis von Vinylethern eingesetzt werden, kann eine Komponente (C) gewählt werden, die Vinylethergruppen oder andere kationisch polymerisierbare Gruppen wie Epoxidgruppen oder Oxetangruppen enthält. Die Komponente (C) ist somit kompatibel zu der in der härtbaren Zusammensetzung vorliegenden Harzkomponente (A) und wird unter den Bedingungen der Polymerisation reaktiv in die Harzmatrix eingebunden. Die hohe Anzahl der Polyacetalfunktionen in der Komponente (C), die durch die Verwendung eines nicht-linearen Polyacetal-Zwischenprodukts mit mehr als zwei endständigen Vinylethergruppen oder anderen reaktiven Endgruppen entsteht, gewährleistet eine schnelle Ablösbarkeit oder Wiederauflösbarkeit der gehärteten Massen.

Das Umsetzen des wenigstens difunktionellen Vinylethers (c1) mit dem wenigstens difunktionellen Alkohol (c2) und der wenigstens einen gemischtfunktionellen Verbindung (c3) unter Bildung der Komponente (C) kann vorteilhaft in einer einstufigen Synthese erfolgen.

Der Einsatz von mehreren unterschiedlich aufgebauten Polyacetal-verbrückten Harzkomponenten (C) ist ebenfalls im Sinne der Erfindung solange die gemischtfunktionelle Komponente (c3) so gewählt wird, dass die Polyacetal-verbrückte Harzkomponente (C) funktionelle Gruppen aufweist, die mit mindestens einem der verwendeten Harze (A) eine Harzmatrix bildet.

Durch den zusätzlichen Einsatz von gemischtfunktionellen Verbindungen (c3), die voneinander verschieden sind, können Hybridverbindungen erhalten werden. So lassen sich beispielsweise durch die Verwendung von Mischungen aus hydroxyfunktionellen (Meth)Acrylaten und hydroxyfunktionellen Oxetanen und/oder Epoxiden als Komponente (c3) Polyacetal-verbrückte Harzkomponenten (C) erhalten, die (Meth)acrylat-Endgruppen sowie Epoxid- und/oder Oxetan-Endgruppen aufweisen, und die sowohl in einer radikalischen als auch einer kationischen Polymerisationsreaktion umgesetzt werden können. Derartige Polyacetal-verbrückte Harzkomponenten (C) können beispielsweise in Epoxy-Acrylat-Hybridformulierungen eingesetzt werden.

Die Verwendung von Verbindungen (c3), die keine dem in der Komponente (A) verwendeten Harz entsprechenden oder damit polymerisierbaren Gruppen aufweisen, ist nicht bevorzugt. Derartige Polyacetalverbindungen erlauben nicht die Formulierung der erfindungsgemäßen Massen, da diese nicht mit der härtbaren Masse copolymerisieren können und dementsprechend in den gehärteten Massen schlechte kohäsive Eigenschaften hervorrufen würden.

Die Bildung eines verzweigten Polyacetal-Zwischenprodukts mit mehr als zwei endständigen Vinylethergruppen oder Hydroxylgruppen wird dadurch erreicht, dass mindestens eine der Verbindungen (c1) oder (c2) tri- oder höherfunktionell ist. Falls ausschließlich difunktionelle Vinylether (c1) und difunktionelle Alkohole (c2) miteinander umgesetzt werden, können lediglich lineare Polyacetalverbindungen aufgebaut werden. Diese führen zu Massen mit niedriger Glasübergangstemperatur und geringer Netzwerkdichte, die nicht im Sinne der Erfindung sind.

Die Polyacetal-verbrückte Verbindung (C) kann eine Molmasse im Bereich von 2000 - 20.000 g/mol, bevorzugt 2000 - 8000 g/mol aufweisen.

Die Verwendung mehrerer unterschiedlich aufgebauter Polyacetalverbindungen (C) ist ebenfalls im Sinne der Erfindung, solange mindestens jeweils eine der Verbindungen (c1) oder (c2) tri- oder höherfunktionell ist.

Im Folgenden werden die zum Aufbau der gemischtfunktionellen Polyacetal-verbrückten Verbindung (C) eingesetzten Verbindungen c1, c2 und c3 näher erläutert:

### Verbindung (c1): Mindestens difunktioneller Vinylether

Als Verbindung (c1) können aliphatische, cycloaliphatische und aromatische Vinylether zum Einsatz kommen. Bevorzugt werden polare, di-, tri- und tetrafunktionelle Vinylether, bevorzugt di- und trifunktionelle Vinylether wie z.B. Diethylenglycloldivinylether (DVE-2), Triethylenglykoldivinylether (DVE-3), 1,4-Butandioldivinylether (BDDVE), 1,4-Cyclohexandimethanoldivinylether (CHDM-di), 1,2,3-Tris(vinyloxy)propane, Trimethylpropanetrivinylether, 1,3,5-Tris[(2-vinyloxy)ethoxy]benzol, Tris[4-(vinyloxy)butyl] 1,2,4-benzenetricarboxylate, 1,3,5-Tris(2-vinyloxyethyl)-1,3,5-triazin, 1,3,5-Cyclohexantrimethanoltrivinylether, 1,1,1-Tris-4-[2-(vinyloxy)ethoxy]phenylethan, Tetrakis(vinyloxymethyl)methan, eingesetzt.

### Verbindung (c2): Mindestens difunktioneller Alkohol

Als Verbindung (c2) können di- oder mehrfachfunktionelle, primäre und sekundäre, aliphatische, cycloaliphatische und aromatische Alkohole eingesetzt werden. Bevorzugt werden di-, tri-, tetra und pentafunktionelle Alkohole verwendet, besonders bevorzugt tri- und tetrafunktionelle Alkohole. Geeignete Alkohole sind unter anderem 1,3-Propandiol, 1,4-Butandiol, 2,3-Butandiol, 1,2-Cyclopentandiol, 1,5-Pentandiol, 1,3-Cyclohexandiol, 1,4-Cyclohexandiol, 2,5-Hexandiol, 1,4-Cyclohexandimethanol, 1,3-Benzyldimethanol, 4,8-Bis(hydroxymethyl)tricyclo[5.2.1.0]^{2,6}decan, Dipropylenglycol, 1,1,1-Trimethylolpropan, Glycerin, 1,2,6-Hexantriol, 2,6-Bis(hydroxymethyl)-p-cresol, Pyrogallol, Phloroglucinol, Pentaerythrit, Ribose, Arabinose, Xylose, Lyxose, Ribulose und Xylulose. Besonders bevorzugt sind Mischungen von Dipropylenglycol und 1,1,1-Trimethylolpropan.

### Gemischtfunktionelle Verbindung (c3):

Die Verbindung (c3) umfasst in einer Ausführungsform mindestens eine Hydroxy- und/oder Aminfunktion und mindestens eine weitere funktionelle Gruppe, welche aus den funktionellen Gruppen der Harze (A) ausgewählt ist oder mit diesen zusammen polymerisieren kann. Darüber hinaus die die Verbindung (c3) strukturell nicht weiter eingeschränkt.

Die weitere funktionelle Gruppe kann beispielsweise Epoxy-, Oxetan-, Vinylether- und/oder (Meth-)Acrylat- Funktionalitäten aufweisen. Bevorzugt umfasst die weitere funktionelle Gruppe der gemischtfunktionellen Verbindung eine Epoxidgruppe, eine (Meth)acrylatgruppe und Kombinationen davon.

Beispiele für epoxyfunktionelle Verbindungen (c3) sind vorverlängerte Epoxidharze.

Beispiele für oxetanfunktionelle Verbindungen (c3) sind 1-(Oxiran-2-yl)ethan-1-ol, 2-(Oxiran-2-yl)ethan-1-ol, 2-(Oxiran-2-yl)-1-phenylethan-1-ol, 2-[(Oxiran-2-yl)methoxy]ethan-1-ol, 3-Ethyl-3-(hydroxymethyl)oxetan (Aron Oxetan OXT-101).

Beispiele für (meth)acrylatfunktionelle Verbindungen (c3) sind 2-Hydroxyethylacrylat, 4-Hydroxybutylacrylat, Hydroxyethylhexylacrylat, Hydroxyisobutylacrylat, 2-Hydroxymethylacrylat, Hydroxyethylhexylmethacrylat,

Beispiele für vinylfunktionelle Verbindungen (c3) sind 2-Hydroxyethylvinylether, Hydroxybutylvinylether (HBVE), Diethylenglycolvinylether, Triethylenglycolvinylether, 1,4-Cyclohexandimethanolvinylether, 3-Aminopropylvinylether (APVE).

Die genannten Beispiele sind dabei nicht als abschließend oder einschränkend zu sehen.

Die Komponente (C) ist in den erfindungsgemäßen Massen in einem Anteil von mindestens 20 Gew.-%, bevorzugt mindestens 40 Gew.-% und besonders bevorzugt mindestens 50 Gew.-% enthalten. Für eine vollständige Auflösbarkeit in Gegenwart von Feuchtigkeit sind Anteile von mehr als 50 Gew.-% bevorzugt.

### Synthese der Polyacetal-verbrückten Verbindung (C):

Die Synthese der Verbindung (C) kann ein- oder zweistufig erfolgen. Im Falle der einstufigen Synthese werden alle Reaktionspartner (c1, c2 und c3) gemischt und unter Rühren in Gegenwart einer Säure als Katalysator für 1 - 24 Stunden, bevorzugt 1 - 6 Stunden, auf 20 - 100 °C, bevorzugt auf 20 - 80 °C temperiert. Nach Abschluss der Reaktion wird der Katalysator durch Zugabe eines Amins, bevorzugt eines sekundären Amins neutralisiert. Das entstehende Salz und überschüssiges Amin können beispielweise durch Filtration entfernt werden.

Im Falle des zweistufigen Prozesses kann im ersten Schritt durch die Umsetzung der Verbindung (c1) und (c2) ein Polyacetal-Zwischenprodukt mit mehr als zwei Hydroxygruppen hergestellt. Dieses kann im Anschluss über dem Fachmann bekannte Methoden unter Verwendung von Linkern wie beispielsweise difunktionellen Isocyanaten (HDI, IPDI), Dicarbonsäurehalogeniden (Oxalylchlorid) oder Dicarbonsäureanhydriden (MHTPA, MHHPA, Glutarsäureanhydrid) und geeigneten gemischtfunktionellen Verbindungen (c3) weiter funktionalisiert werden. Das Polyacetal-Zwischenprodukt mit mehr als zwei Hydroxygruppen kann außerdem mit gemischtfunktionellen Verbindungen zur Komponente (C) umgesetzt werden, die eine gegenüber Hydroxylgruppen reaktive funktionelle Gruppe, beispielsweise eine Isocyanatgruppe, und eine weitere funktionelle Gruppe der Harzkomponente (A) oder eine damit polymerisierbare Gruppe aufweisen.

### (D) Beschleuniger

Um die Zeit bis zu einer Ab- und/oder Auflösung in Gegenwart von Feuchtigkeit zu verkürzen können den Massen zusätzlich Beschleuniger zugesetzt werden. Dabei kommen insbesondere Treibmittel (D1) wie beispielsweise anorganische Carbonate, Tartrate, Polyphosphate, Azoverbindungen, Azide und expandierbare Mikrospheren zum Einsatz.

Als weitere Beschleuniger können Säuren (D2) zum Einsatz kommen. Geeignet sind insbesondere organische Säuren wie beispielsweise Acrylsäure, Oxalsäure, Zitronensäure oder p-Toluolsulfonsäure.

Auch der Einsatz photolatenter Säuren, die durch Belichtung eine Säure freisetzen, ist möglich.

Die Beschleuniger (D) können in den erfindungsgemäßen Massen allein oder in Kombination eingesetzt werden.

Die Komponente (D) ist in den erfindungsgemäßen Massen in einem Anteil von 0 - 15 Gew.-%, bevorzugt 0 - 10 Gew.-% und besonders bevorzugt 1 - 5 Gew.-%, enthalten.

### Komponente (E): Additive

Die beschriebenen Massen können darüber hinaus noch fakultative Bestandteile als Additive (E) enthalten. Die Additive (E) sind vorzugsweise aus der Gruppe der Füllstoffe, Farbstoffe, Pigmente, Alterungsschutzmittel, Fluoreszenzmittel, Stabilisatoren, Polymerisationsbeschleuniger, Sensibilisatoren, Haftvermittler, Trockenmittel, Vernetzer, Fließverbesserer, Benetzungsmittel, Thixotropierungsmittel, Verdünnungsmittel, Flexibilisierer, polymeren Verdickungsmittel, Flammschutzmittel, Korrosionsinhibitoren, Weichmacher und Tackyfier ausgewählt.

Die vorangegangene Aufzählung an Additiven ist als beispielhaft und keineswegs limitierend zu erachten.

### Formulierung der erfindungsgemäßen Massen

Eine Formulierung der erfindungsgemäßen Massen umfasst mindestens die Komponenten (A) bis (C). Darüber hinaus können zusätzlich Beschleuniger (D) und Additive (E) enthalten sein.

In einer ersten Ausführungsform umfasst oder besteht die Masse aus den folgenden Komponenten, jeweils bezogen auf das Gesamtgewicht der Masse:
(A) 1 bis 70 Gew.-% der mindestens einen härtbaren Harzkomponente (A);
(B) 0,001 bis 70 Gew.-% des mindestens einen Härters und/oder des mindestens einen Initiators für die Polymerisation der härtbaren Harzkomponente;
(C) 20 bis 95 Gew.-% der mindestens einen Polyacetal-verbrückte Harzkomponente;
(D) 0 bis 15 Gew.-% eines Beschleunigers;
(E) 0 bis 70 Gew.-% weitere Additive aus der Gruppe der Füllstoffe, Farbstoffe, Pigmente, Alterungsschutzmittel, Fluoreszenzmittel, Stabilisatoren, Polymerisationsbeschleuniger, Sensibilisatoren, Haftvermittler, Trockenmittel, Vernetzer, Fließverbesserer, Benetzungsmittel, Thixotropierungsmittel, reaktiven und nicht-reaktiven Verdünnungsmittel, Flexibilisierer, polymeren Verdickungsmittel, Flammschutzmittel, Korrosionsinhibitoren, Weichmacher, Tackyfier und Kombinationen davon.

Die erfindungsgemäßen Massen werden bevorzugt als Einkomponentenmassen bereitgestellt.

### Verwendung der erfindungsgemäßen Massen

Die erfindungsgemäßen Massen eignen sich insbesondere zum Aufbau auf- und wiederlösbarer Verklebungen, Beschichtungen und Vergüssen. Diese können beispielsweise bei teuren Bauteilen als Schutzschicht während des Produktionsprozesses aufgetragen werden und anschließend wieder unter milden Bedingungen entfernt werden. Ebenso ist der Einsatz als Fügelösung für Elektronikanwendungen in Verbindung mit einem Recycling am Lebensende der Geräte unter Rückgewinnung der Bauteile denkbar.

Insbesondere eignen sich die Masse als Stützmaterial für die Herstellung additiv gefertigter Bauteile. Die Massen besitzen dabei gegenüber vergleichbaren Materialien den Vorteil, dass sie sich unter milden Bedingungen im Wesentlichen rückstandsfrei von dem Bauteil entfernen lassen. Da die Polyacetal-verbrückte Harzkomponente (C) in die Harzmatrix eingebunden wird, zeichnen sich die gehärteten Massen gleichzeitig durch eine gute Kohäsion und eine zuverlässige Mechanik aus, solange diese nicht den Ablösebedingungen ausgesetzt werden.

Ferner können die Massen als temporäres Fixiermaterial in der Fertigung sogenannter Fan-out Wafer Level Packages (FOWLP) eingesetzt werden. Insbesondere sind die Massen als temporärer Träger für Prozesse geeignet, wie sie in der wissenschaftlichen Publikation von T. Braun, M. Topper und K.-D. Lang, "Opportunities of Fan-out Wafer Level Packaging (FOWLP) for RF applications" aus dem Journal IEEE im Rahmen des 16th Topical Meeting on Silicon Monolithic Integrated Circuits in RF Systems (SiRF) 2016, publiziert wurden.

### Härtung der erfindungsgemäßen Massen

Die erfindungsgemäßen Massen lassen sich entweder thermisch und/oder durch aktinische Strahlung, insbesondere UV-Strahlung härten. Die Polyacetal-verbrückte Harzkomponente (C) hat dabei keinen Einfluss auf die typischen Aushärtebedingungen, da sie mit in die Harzmatrix einpolymerisiert.

### Verwendete Messverfahren, -Geräte und Definitionen

Im Folgenden werden Messverfahren und sowie Begriffsdefinitionen erläutert, die im Zusammenhang mit den in Tabelle 1 dargestellten Massen und Versuche verwendet wurden.

### Bestrahlung

Zur Aktivierung der Photoinitiatoren (B) wurden die erfindungsgemäßen Massen mit einer LED-Lampe DELOLUX 20 / 365 der Firma DELO Industrie Klebstoffe GmbH & Co. KGaA mit einem Emissionsmaximum bei 365 nm mit einer Intensität von 200 ± 20 mW/cm² für eine Dauer von 60 s bestrahlt.

### Aushärtung

"Vernetzung" oder "Aushärtung" werden definiert als Polymerisations- oder Additionsreaktion über den Gelpunkt hinaus. Der Gelpunkt ist der Punkt, an dem das Speichermodul G' gleich dem Verlustmodul G" wird. Die Aushärtung der Prüfkörper erfolgte bei Raumtemperatur für 7 Tage.

### Raumtemperatur

Raumtemperatur ist definiert als 23 ± 2 °C.

### Überprüfung des Reaktionsfortschrittes der Umsetzungen zu Komponente (C)

Die Überprüfung des Reaktionsfortschritts zur Herstellung des Polyacetal-Zwischenprodukts und die anschließende Umsetzung mit der gemischtfunktionellen Verbindung (c3) wurde IR-spektroskopisch beurteilt. Dazu wurde ein Infrarotspektrometer der Firma Bruker der Marke "ALPHA" verwendet und die Änderung der unten angegebenen Schwingungsbanden verfolgt. Die Reaktion gilt als vollständig sobald die relevante Bande verschwunden ist und/oder keine Veränderung der Bande mehr eintritt.

### Prüfung der Ab- und Auflöseigenschaften der Massen

Zur Überprüfung der Ablösbarkeit der erfindungsgemäßen Massen werden zwei Probekörper (Abmessungen 20 mm * 20 mm * 5 mm) aus Glas und Aluminium mit 5 mm Überlappung und einer Schichtdicke von 0,1 mm unter Verwendung der jeweiligen Masse miteinander verklebt.

Nach erfolgter Aushärtung wurden die Probekörper an einem Gewicht unter Verwendung einer Klammer befestigt und in ein 80 °C warmes Wasserbad platziert (pH 7). Die Zeit bis zum Aufbrechen der Fügestelle wird gemessen. Nach dem Aufbrechen der Fügestelle werden die Probekörper entnommen und auf Restspuren der ausgehärteten Masse untersucht.

Zur Bestimmung der Auflösbarkeit der erfindungsgemäßen Massen wurde eine 3 x 3 cm große und 200 µm dicke Folie der zu prüfenden Massen bei 365 nm für 60 s ausgehärtet. Danach wurde diese in ein 80 °C warmes Wasserbad mit einem pH-Wert von 3 gegeben. Sobald keine Teile der Folie visuell mehr festgestellt werden konnte, wurde die die Zeit notiert.

### Bestimmung der Glasübergangstemperatur

DSC-Messungen von Reaktivität und Glasübergang erfolgen in einem dynamischen Differenzkalorimeter (DSC) vom Typ DSC 822e oder DSC 823e der Firma Mettler Toledo.

16-20 mg der flüssigen Probe werden dazu in einen Aluminiumtiegel (40 µL) mit Pin eingewogen, mit einem gelochten Deckel verschlossen und einer Messung mit folgenden Segmenten unterzogen: (1) Isotherm, 0 °C, 2 min; (2) dynamisch 0-250 °C, 10 K/min; (3) dynamisch 250-0 °C, -10 K/min; (4) isotherm, 0 °C, 3 min; (5) dynamisch 0-250 °C, 20 K/min. Prozessgas in allen Segmenten ist Luft (Volumenstrom 30 mL/min).

Ausgewertet werden die Heizsegmente (2) für die Reaktivität und (5) für den Glasübergang. Die Reaktionsenthalpie wird mit einer Spline-Kurve als Basislinie ermittelt, auf die Einwaage normiert und ihr Betrag als Exothermie angegeben. Die Glasumwandlung wird über die Tangentenmethode analysiert.

### Bestimmung der Reißdehnung

Aus den Massen wurden Schulterstäbe definierter Größe (Abmessungen 25 × 5,5 × 2 mm, Messstrecke 10 × 2 × 2 mm) gegossen. Die Schulterstäbe wurden von beiden Seiten jeweils 60 s lang bestrahlt (DELOLUX 20 / 365; Intensität: 200 mW/cm²). Die Schulterstäbe wurden anschließend in einer Zugprüfmaschine der Firma Zwick mit einer Geschwindigkeit von 30 mm/min auseinandergezogen und die Kohäsion und Reißdehnung gemäß DIN EN ISO 527 bestimmt.

### Formulierungsbeispiele:

### Komponente (A): Kationisch polymerisierbare Bestandteile

(A1) Epoxidhaltige Verbindungen
   (A1-1): 3,4-Epoxycyclohexylmethyl-3',4'-epoxycyclohexancarboxylat, erhältlich unter dem Handelsnamen Celloxide 2021 P von der Firma Daicel
(A2) Oxetanhaltige Verbindungen
   (A2-1): OXT-221 = Bis[1-Ethyl(3-oxetanyl)]methyl ether; erhältlich von der Firma Toagosei
(A4) Radikalisch strahlungshärtbare Verbindungen
   (A4-1): Acrylsäure, erhältlich von der Firma Sigma-Aldrich
   (A4-2): SR256 = 2(2-Ethoxyethoxy)-ethylacrylat erhältlich von der Firma Sartomer
   (A4-3): SR495B = Caprolactonacrylat erhältlich von der Firma Sartomer
   (A4-4): DMAA = N,N-Dimethylacrylamid

### Komponente (B): Härter und/oder Initiator

(B4) Kationischer Photoinitiator
   (B4-1): Irgacure 290 = Tris(4-((4-acetylphenyl)thio)phenyl)-sulfonium tetrakis(perfluorophenyl)borat erhältlich von der Firma IGM Resins
(B6) Radikalischer Photoinitiator
   (B6-1): Irgacure 819 = Bis(2,4,6-trimethylbenzoyl)-phenylphosphinoxid erhältlich von der Firma IGM Resins

### Synthesebeispiele für Polyacetalverbindungen (C):

(c1) Wenigstens difunktioneller Vinylether
   (c1-1): Triethylenglycoldivinylether erhältlich von der Firma BASF SE
(c2) Wenigstens difunktioneller Alkohol
   (c2-1) Dipropylenglykol
   (c2-2) 1,1,1-Tris(hydroxymethly)propan
(c3) Gemischtfunktionelle Verbindung
   (c3-1) OXT-101 = 3-Ethyloxetan-3-methanol; erhältlich von der Firma Toagosei
   (c3-2) 4-Hydroxybutylacrylat
   (c3-3) Karenz AOI = 2-Isocyanatoethylacrylate; erhältlich von der Firma Showa Denko

### Komponente (D): Beschleuniger

(D1) Saure Beschleuniger
   (D1-1): Oxalsäure
(D2) Expandierende Mikrospheren
   (D2-1): Expancel Partikel 031 DUX 40; erhältlich von der Firma Nouryon

### Komponente (E): Additive

(E1-1): Thixotropierungsmittel HDK N 20 erhältlich von der Firma Wacker

### (C1): Herstellung eines oxetanfunktionalisierten Polyacetals

In einem ausgeheizten Gefäß werden unter einer Stickstoffatmosphäre 80,0 g (0,388 mol, 11 Äq) Triethylenglycoldivinylether (c1-1), 38,2 g (0,282 mol, 8 Äq) Dipropylenglykol (c2-1), 4,73 g (0,035 mol, 1 Äq.) 1,1,1-Tris(hydroxymethly)propan (c2-2), 13,3 g (115 mol, 3,25 Äq.) Aron OXT-101 (c3-1) und 222 mg (2,47 mmol, 0,07 Äq.) Oxalsäure (D1-1) vorgelegt. Im Anschluss wird die Reaktionsmischung unter ständigem Rühren bei 80 °C gehalten bis im IR keine Veränderung der OH-Schwingungsbande bei 3405 cm⁻¹ mehr beobachtet werden kann.

Danach wird die Reaktionsmischung mit 260 mL Essigsäureethylester versetzt und es werden unter kräftigem Rühren 6,8 g Aktivkohle zugegeben. Der Feststoff wird im Anschluss abfiltriert und das überstehende Lösungsmittel unter vermindertem Druck entfernt. Es wurden 100 g (74%) des oxetanfunktionalisierten Polyacetals (C1) mit einer Viskosität von 1.461 mPas erhalten.

### (C2) Herstellung eines epoxyfunktionalisierten Polyacetals

In einem ausgeheizten Gefäß werden unter einer Stickstoffatmosphäre 175 g (0,865 mol, 8,5 Äq) Triethylenglycoldivinylether (c1-1), 117 g (0,865 mol, 8,5 Äq) Dipropylenglykol (c2-1), 13,7 g (0,0,102 mol, 1 Äq.) 1,1,1-Tris(hydroxymethly)propan (c2-2) und 640 mg (7,13 mmol, 0,07 Äq.) Oxalsäure (D1-1) vorgelegt. Im Anschluss wird die Reaktionsmischung unter ständigem Rühren für 4 h auf 85 °C temperiert. Im Anschluss daran wird der Reaktionsmischung 220 mg (1,95 mmol, 0,077 Äq.) 1,4-Diazabicyclo[2.2.2]octan zugesetzt und die Mischung homogenisiert.

Danach wird die Reaktionsmischung mit 300 mL Essigsäureethylester versetzt und es werden unter kräftigem Rühren 15,3 g Aktivkohle zugegeben. Der Feststoff wird im Anschluss abfiltriert und das überstehende Lösungsmittel unter vermindertem Druck entfernt. Es wurden 275 g (96%) des Polyacetal-Zwischenprodukts I als Öl erhalten.

100 g (0,063 mol 1 Äq.) des Polyacetal-Zwischenprodukts I werden unter trockener Luft auf 55 °C erwärmt und mit 14,0 g (0,120 mol, 1,9 Äq.) Glutarsäureanhydrid versetzt. Im Anschluss werden 680 mg (4,43 mmol, 0,07 Äq.) 1,8-Diazabicycloundecen zugegeben und die Reaktionsmischung für 4 h bei 80 °C gerührt.

Es wurden 133 g (0,528 mol, 8,35 Äq.) 7-Oxabicyclo[4.1.0]hept-3-ylmethyl-7-oxabicyclo[4.1.0]heptan-3-carboxylat (A1-1) zugegeben und so lange gerührt bis im IR keine COOH-Schwingungsbanden zwischen 3070 cm⁻¹ und 3290 cm⁻¹ mehr ausgemacht werden kann. Nach Abschluss der Reaktion werden 240 g (97%) des epoxyfunktionalisierten Polyacetals (C2) mit einer Viskosität von 3.386 mPas erhalten.

### (C3) Herstellung eines acrylatfunktionalisierten Polyacetals

In einem ausgeheizten Gefäß werden 30,0 g (0,145 mol, 18 Äq) Triethylenglycoldivinylether (c1-1), 18,6 g (0,137 mol, 17 Äq) Dipropylenglykol (c2-1), 1,08 g (8,08 mmol, 1 Äq.) 1,1,1-Tris(hydroxymethly)propan (c2-2), 2,33 g (0,016 mmol, 2 Äq.) 4-Hydroxybutylacrylat (c3-2), 102 mg (1,13 mmol, 0,14 Äq.) Oxalsäure (D1-1), 10,7 mg (0,05 mmol, 6 mÄq.) Butylhydroxytoluol und 12,3 mg (0,10 mmol, 0,012 Äq.) 4-Methoxyphenol vorgelegt. Im Anschluss wird die Reaktionsmischung unter ständigem Rühren so lange bei 80 °C gehalten bis im IR bei 3488 cm⁻¹ keine Veränderung der OH-Schwingungsbande mehr zu beobachten ist.

Es wurden 45 g (88%) des acrylatfunktionalisierten Polyacetals (C3) mit einer Viskosität von 1.812 mPas erhalten.

### (C4) Herstellung eines Diisocyanat-verknüpften acrylatfunktionalisierten Polyacetals

30 g (0,019 mol, 1 Äq.) des Polyacetal-Zwischenprodukts I werden unter trockener Luft mit 8,44 g (0,038 mol, 2 Äq.) Isophorondiisocyanat versetzt. Im Anschluss werden zweimal 26,5 mg (0,02 mmol, 1,1 mÄq.) Bismutneodecanoat zugegeben und die Reaktionsmischung für 5 h bei 80 °C gerührt.

Im Anschluss werden 5,47 g (0,038 mol, 2 Äq.) 4-Hydroxybutylacrylat (c3-2) zugegeben und die Reaktion so lange geführt bis keine NCO-Schwingungsband bei 2262 cm⁻¹ im IR mehr beobachtet werden kann. Es wurden 39 g (98%) des acrylatfunktionalisierten Polyacetals (C4) mit einer Viskosität von 169.670 mPas erhalten.

### Herstellung Monoisocyanat-verknüpfter acrylatfunktioneller Polyacetale (C5-C9)

Zunächst werden die Polyacetal-Zwischenprodukte II bis V entsprechend den in Tabelle 1 angegeben Äquivalenten in Anlehnung an die Synthese es Polyacetal-Zwischenprodukts I hergestellt aus dem Vinylether (c1-1) und den Polyolen (c2-1) und (c2.-2) in Gegenwart von Oxalsäure (D1-1) hergestellt.

Anschließend werden in einem ausgeheizten Gefäß unter einer Stickstoffatmosphäre 1 Äq. der Polyacetalzwischenstufen I-V mit 7 mÄq. Butylhydroxytoluol (BHT) und 14 mÄq. 4-Methoxyphenol (HQMME) vorgelegt. Im Anschluss werden 2 Äq. der gemischtfunktionellen Verbindung (c3-3; Karenz AOI) und 3,5 mÄq. Bismutneodecanoat zugegeben. Die Reaktionsmischung wurde so lange bei 70 °C gehalten bis keine NCO-Bande (2239 - 2275 cm⁻¹) im IR mehr festzustellen war.

Aus den Polyacetalzwischenstufen I bis V werden die acrylatfunktionellen Polyacetale (C5-C9) als Öle in Ausbeuten >90% erhalten.

**Tabelle 1: Synthese der Polyacetal-verbrückten Harzkomponenten C5-C9**

| Polyacetalzwischenstufe | I | II | III | IV | V |
|---|---|---|---|---|---|
| c1-1 [Äq.] | 8,5 | 7,5 | 8,5 | 8,5 | 8,5 |
| c2-1 [Äq.] | 8,5 | 8,5 | 11 | 7,5 | 5,5 |
| c2-2 [Äq.] | 1 | 1 | 1 | 2,5 | 3 |
| D1-1 [Äq.] | 0,07 | 0,062 | 0,074 | 0,07 | 0,055 |
| Viskosität [mPas] | 4.050 | 2.843 | 2.326 | 3.883 | 75.615 |
| Ideale Acetalanzahl* | 18 | 14,5 | 17 | 15 | 13 |
| Polyacetal | C5 | C6 | C7 | C8 | C9 |

| | | | | | |
|---|---|---|---|---|---|
| * ideale Acetalanzahl Pᵢ = [theoretische Anzahl Polyacetalverknüpfungen]; unter der Annahme, dass jede Vinylgruppe von (c1-x) mit einer Hydroxyfunktion von (c2-x) zu einer Polyacetalgruppe umgesetzt wird. | | | | | |

### (C10) Herstellung eines unfunktionalisierten Polyacetals

In einem ausgeheizten Gefäß werden unter einer Stickstoffatmosphäre 60,0 g (0,300 mol, 8,5 Äq) Triethylenglycoldivinylether (c1-1), 40,2 g (0,300 mol, 8,5 Äq) Dipropylenglykol (c2-1), 4,68 g (0,025 mol, 1 Äq.) 1,1,1-Tris(hydroxymethly)propan (c2-2), 7,76 g (0,105 mol, 3 Äq.) 1-Butanol und 220 mg (2,40 mmol, 0,07 Äq.) Oxalsäure (D1-1) vorgelegt. Im Anschluss wird die Reaktionsmischung unter ständigem Rühren so lange auf 85 °C temperiert bis im IR keine Vinyl-Schwingungsbande bei 1618 cm⁻¹ mehr zu beobachten ist.

Es wurden 110 g (98%) des unfunktionalisierten Polyacetals (C10) mit einer Viskosität von 223 mPas erhalten, das keine funktionellen Gruppen der Harzkomponente (A) enthält.

**Tabelle 2: Erfindungsgemäße Formulierungsbeispiele (Anteile in Gew.-% bezogen auf das Gesamtgewicht der Formulierung)**

| **Komponenten** | | | | | | | |
|---|---|---|---|---|---|---|---|
| **Bsp.** | | **1** | **2** | **3** | **4** | **5** | **6** |
| **(A)** | (A1-1) | | 22,5 | 23,2 | | | |
| | (A2-1) | 25,7 | 11 | 11,3 | | | |
| | (A4-1) | | | | 19 | 9,8 | 9,78 |
| | (A4-2) | | | | 9,5 | 4,9 | 4,9 |
| | (A4-3) | | | | 9,5 | 4,9 | 4,9 |
| | (A4-4) | | | | 8,6 | 4,4 | 4,42 |
| **(B)** | B4-1 | 0,5 | 0,5 | 0,5 | | | |
| | B6-1 | | | | 1 | 1 | 1 |
| | C1 | | 63,2 | 64,8 | | | |
| **(C)** | C2 | 71 | | | | | |
| | C3 | | | | 47,6 | 50 | |
| | C5 | | | | | | |
| | C6 | | | | | | |
| | C7 | | | | | | 70 |
| | C8 | | | | | | |
| | C9 | | | | | | |
| **(D)** | D1-1 | | | 0,2 | | | |
| | D2-1 | | | | | 20 | |
| **(E)** | E1-1 | 2,8 | 2,8 | | 4,8 | 5 | 5 |
| E-Modul [MPa] | | n.b. | n.b. | n.b. | 0,2 | n.b. | 8,0 |
| Glasübergangstemperatur [°C] | | -14 | -20 | n.b. | -65 | -61 | -35 |
| Reißdehnung [%] | | n.b. | n.b. | n.b. | 54 | n.b. | 16 |
| Zeit bis zur Ablösung [min] | | 71,6 | 24,6 | 12,0 | 20,9 | 7,9 | 14,0 |
| Zeit bis zur Auflösung [h] | | n.b. | n.b. | n.b. | >48 | 24 | n.b. |

**Tabelle 2: Fortsetzung**

| **Komponenten** | | | | | | | |
|---|---|---|---|---|---|---|---|
| **Bsp.** | | **7** | **8** | **9** | **10** | **11** | **12** |
| **(A)** | (A1-1) | | | | | | |
| | (A2-1) | | | | | | |
| | (A4-1) | 9,78 | 9,78 | 9,78 | 27,7 | 19 | 9,8 |
| | (A4-2) | 4,9 | 4,9 | 4,9 | 12,9 | 9,5 | 4,9 |
| | (A4-3) | 4,9 | 4,9 | 4,9 | 12,9 | 9,5 | 4,9 |
| | (A4-4) | 4,42 | 4,42 | 4,42 | 8,9 | 8,6 | 4,4 |
| **(B)** | B4-1 | | | | | | |
| | B6-1 | 1 | 1 | 1 | 1 | 1 | 1 |
| | C1 | | | | | | |
| **(C)** | C2 | | | | | | |
| | C3 | | | | | | |
| | C5 | | | | 29,7 | 47,6 | 70 |
| | C6 | | 70 | | | | |
| | C7 | | | | | | |
| | C8 | 70 | | | | | |
| | C9 | | | 70 | | | |
| **(D)** | D1-1 | | | | | | |
| | D2-1 | | | | | | |
| **(E)** | E1-1 | 5 | 5 | 5 | 6,9 | 4,8 | 5 |
| E-Modul [MPa] | | 5,4 | 6,3 | 4,1 | n.b. | n.b. | n.b. |
| Glasübergangstemperatur [°C] | | -44 | -43 | -50 | -32 | -40 | -52 |
| Reißdehnung [%] | | 18 | 15 | 22 | n.b. | n.b. | n.b. |
| Zeit bis zur Ablösung [min] | | 19,1 | 21,6 | 24,1 | 32,6 | 14,2 | 11,7 |
| Zeit bis zur Auflösung [h] | | 12 | n.b. | n.b. | n.b. | n.b. | n.b. |

**Tabelle 3: Vergleichsbeispiele (Anteile in Gew.-% bezogen auf das Gesamtgewicht der Formulierung)**

| **Komponenten** | | | |
|---|---|---|---|
| Bsp. | | 13 | 14 |
| (A) | (A1-1) | | |
| | (A2-1) | | |
| | (A4-1) | 9,78 | 33,5 |
| | (A4-2) | 4,9 | 15,6 |
| | (A4-3) | 4,9 | 15,6 |
| | (A4-4) | 4,42 | 10,8 |
| (B) | B4-1 | | |
| | B6-1 | 1 | 1,2 |
| (C) | C5 | | 15 |
| | C10 | 70 | |
| (E) | E1-1 | | 8,4 |
| E-Modul [MPa] | | n.b. | n.b. |
| Glasübergangstemperatur [°C] | | n.b. | n.b. |
| Reißdehnung [%] | | n.b. | n.b. |
| Zeit bis zur Ablösung | | > 1 w | > 1 d |

Die erfindungsgemäßen Zusammensetzungen 1-3 umfassen kationisch härtbare Systeme die jeweils eine oxetanfunktionalisierte Polyacetal-verbrückte Harzkomponente (C1) oder eine epoxyfunktionelle Polyacetal-verbrückte Harzkomponente (C2) enthalten. Die Ablösung der Masse des Beispiels 2 auf Basis der oxetanfunktionalisierten Polyacetal-verbrückten Harzkomponente (C2) erfolgt nahezu dreimal so schnell wie die Masse des Beispiels 1 auf Basis von (C2). Bereits durch Zugabe 0,2 Gewichtsteilen eines sauren Beschleunigers (erfindungsgemäßes Beispiel 3) kann die Ablösezeit um weitere 12 Minuten reduziert werden.

Bei den erfindungsgemäßen Beispielen 4 und 5 auf Basis acrylathaltiger Formulierungen lässt sich durch Zugabe expandierbarer Mikrospheren (D2-1) ebenfalls eine Beschleunigung der Ablösezeit um fast annährend ein Drittel erreichen. Die erfindungsgemäßen Massen des Beispiels 5 lassen sich innerhalb von 24 h vollständig rückstandsfrei auflösen.

Der Einfluss der Acetalanzahl, die ein Maß für die Anzahl der Acetalfunktionen in der Komponente (C) darstellt, wird in den erfindungsgemäßen Beispielen 6-9 deutlich. Mit steigender Acetalanzahl verkürzt sich ebenfalls die Zeit bis zur Ablösung. Die Massen des erfindungsgemäßen Beispiels 6 (theoretische Acetalanzahl 17) sind innerhalb von 14 Minuten abgelöst, wohingegen die Massen des Beispiels 9 mit einer Acetalanzahl von 13 erst innerhalb von 24 Minuten abgelöst sind.

Die Beispiele der erfindungsgemäßen Massen 10-12 in Verbindung mit dem Vergleichsbeispiel 14 zeigen die Untergrenze des Anteils der Polyacetal-verbrückten Harzkomponente (C) auf. Bei Vergleichsbeispiel 14 liegt der Anteil des Polyacetals unter 20 Gew.-%. Die Zeit bis zur Ablösung liegt bei über einem Tag. Die erfindungsgemäßen Beispiele 10 bis 12 zeigen mit einem steigenden Anteil des Polyacetals (C) eine verkürzte Ablösezeit.

Vergleichsbeispiel 13 enthält das unfunktionalisierte Polyacetal (C10) in einem Anteil von 70 Gew.-%. Trotz des hohen Anteils benötigt die gehärtete Zusammensetzung über eine Woche, bis eine Ablösung vom Substrat erfolgt. Durch eine fehlende Einbindung des Polyacetals (C10) in das polymere Netzwerk ist Vergleichsbeispiel 13 nicht erfindungsgemäß.

## Patentansprüche

1. Härtbare Zusammensetzung, die bei Raumtemperatur flüssig ist, wobei die Zusammensetzung Folgendes umfasst:
A) Mindestens eine härtbare Harzkomponente, die aus der aus epoxidhaltigen Verbindungen, Oxetanen, Vinylethern, (Meth)acrylaten und Kombinationen davon bestehenden Gruppe ausgewählt ist;
B) Mindestens einen Härter und/oder einen Initiator für die Polymerisation der härtbaren Harzkomponente; und
C) Mindestens eine Polyacetal-verbrückte Harzkomponente, die erhältlich ist durch Umsetzen mindestens eines wenigstens difunktionellen Vinylethers (c1) mit mindestens einem wenigstens difunktionellen Alkohol (c2), unter Bildung eines Polyacetal-Zwischenprodukts mit mehr als zwei endständigen Vinylethergruppen oder mehr als zwei endständigen Hydroxlygruppen, und
a) Umsetzen des Polyacetal-Zwischenprodukts, das mehr als zwei endständige Vinylethergruppen aufweist, mit wenigstens einer gemischtfunktionellen Verbindung (c3), die wenigstens eine Hydroxylgruppe oder eine Amingruppe sowie wenigstens eine weitere funktionelle Gruppe der Harzkomponente (A) oder eine damit polymerisierbare Gruppe aufweist; oder
b) Umsetzen des Polyacetal-Zwischenprodukts, das mehr als zwei endständige Hydroxylgruppen aufweist, mit einem gegenüber Hydroxylgruppen reaktiven Linker, sowie weitere Umsetzung mit der gemischtfunktionellen Verbindung (c3) oder einer difunktionellen Harzkomponente (A); oder
c) Umsetzen des Polyacetal-Zwischenprodukts, das mehr als zwei endständige Hydroxylgruppen aufweist, mit einer gemischtfunktionellen Verbindung (c3), die wenigstens eine Isocyanatgruppe und eine weitere funktionelle Gruppe der Harzkomponente (A) oder einer damit polymerisierbaren Gruppe aufweist, und
wobei die Polyacetal-verbrückte Harzkomponente (C) in der Zusammensetzung in einem Anteil von mindestens 20 Gew.-% vorliegt, bezogen auf das Gesamtgewicht der Zusammensetzung.

2. Zusammensetzung nach Anspruch 1, **dadurch gekennzeichnet, dass** das Umsetzen des wenigstens difunktionellen Vinylethers (c1) mit dem wenigstens difunktionellen Alkohol (c2) und der wenigstens einen gemischtfunktionellen Verbindung (c3) in einer einstufigen Synthese erfolgt.

3. Zusammensetzung nach Anspruch 1 oder 2, **dadurch gekennzeichnet, dass** die Harzkomponente (A) eine epoxidhaltige Verbindung und/oder ein Oxetan umfasst, und dass die Zusammensetzung einen Härter (B1) aus der Gruppe der Amine und/oder Anhydride umfasst.

4. Zusammensetzung nach Anspruch 1 oder 2, **dadurch gekennzeichnet, dass** die Harzkomponente (A) eine epoxidhaltige Verbindung, ein Oxetan und/oder einen Vinylether umfasst, und dass die Zusammensetzung einen Initiator für die kationische Polymerisation umfasst.

5. Zusammensetzung nach einem der vorhergehenden Ansprüche, **dadurch gekennzeichnet, dass** die Harzkomponente (A) eine radikalisch härtbare (Meth)acrylatverbindung umfasst, und dass die Zusammensetzung einen Initiator für die radikalische Polymerisation umfasst.

6. Zusammensetzung nach Anspruch 1 oder 2, **dadurch gekennzeichnet, dass** die Harzkomponente (A) eine epoxidhaltige Verbindung und/oder ein Oxetan sowie eine strahlungshärtbare Verbindung umfasst, oder eine Hybridverbindung umfasst, die Epoxidgruppen und strahlungshärtbare Gruppen aufweist, und dass die Zusammensetzung einen Härter aus der Gruppe der Amine und/oder Anhydride sowie zusätzlich einen Initiator für die radikalische Polymerisation umfasst.

7. Zusammensetzung nach einem der vorhergehenden Ansprüche, **dadurch gekennzeichnet, dass** der mindestens difunktionelle Vinlyether (c1) aus der aus aliphatischen, cycloaliphatischen, aromatischen Vinylethern und Kombinationen davon bestehenden Gruppe ausgewählt ist, wobei der Vinylether bevorzugt ein polarer Vinylether mit einer Funktionalität von zwei bis vier ist, weiter bevorzugt, dass der Vinylether ausgewählt ist aus Diethylenglycloldivinylether (DVE-2), Triethylenglykoldivinylether (DVE-3), 1,4-Butandioldivinylether (BDDVE), 1,4-Cyclohexandimethanoldivinylether (CHDM-di), 1,2,3-Tris(vinyloxy)propane, Trimethylpropanetrivinylether, 1,3,5-Tris[(2-vinyloxy)ethoxy]benzol, Tris[4-(vinyloxy)butyl] 1,2,4-benzenetricarboxylate, 1,3,5-Tris(2-vinyloxyethyl)-1,3,5-triazin, 1,3,5-Cyclohexantrimethanoltrivinylether, 1,1,1-Tris-4-[2-(vinyloxy)ethoxy]phenylethan, Tetrakis(vinyloxymethyl)methan, und Kombinationen davon.

8. Zusammensetzung nach einem der vorhergehenden Ansprüche, **dadurch gekennzeichnet, dass** der mindestens difunktionelle Alkohol aus der aus primären und sekundären, aliphatischen, cycloaliphatischen und aromatische Alkoholen sowie Kombinationen davon bestehenden Gruppe ausgewählt ist, wobei der Alkohol bevorzugt eine Funktionalität von zwei bis fünf aufweist, und weiter bevorzugt, dass der Alkohol ausgewählt ist aus Dipropylenglycol, 1,1,1-Trimethylolpropan, Glycerin, 1,2,6-Hexantriol, 2,6-Bis(hydroxymethyl)-p-cresol, Pyrogallol, Phloroglucinol, Pentaerythrit, Ribose, Arabinose, Xylose, Lyxose, Ribulose, Xylulose und Kombinationen davon.

9. Zusammensetzung nach einem der vorhergehenden Ansprüche, **dadurch gekennzeichnet, dass** die weitere funktionelle Gruppe der gemischtfunktionellen Verbindung (c3) eine Epoxidgruppe, eine (Meth)acrylatgruppe und Kombinationen davon umfasst.

10. Zusammensetzung nach einem der vorhergehenden Ansprüche, **dadurch gekennzeichnet, dass** die gemischtfunktionelle Verbindung (c3) ausgewählt ist aus Glycidol, vorverlängerten Epoxidharzen, 1-(Oxiran-2-yl)ethan-1-ol, 2-(Oxiran-2-yl)ethan-1-ol, 2-(Oxiran-2-yl)-1-phenylethan-1-ol, 2-[(Oxiran-2-yl)methoxy]ethan-1-ol, 3-Ethyl-3-(hydroxymethyl)oxetan, 2-Hydroxyethylacrylat, 4-Hydroxybutylacrylat, Hydroxyethylhexylacrylat, Hydroxyisobutylacrylat, 2-Hydroxymethylacrylat, Hydroxyethylhexylmethacrylat, 2-Hydroxyethylvinylether, Hydroxybutylvinylether (HBVE), Diethylenglycolvinylether, Triethylenglycolvinylether, 1,4-Cyclohexandimethanolvinylether, 3-Aminopropylvinylether (APVE), und Kombinationen davon.

11. Zusammensetzung nach einem der einem der vorhergehenden Ansprüche, **dadurch gekennzeichnet, dass** die polyacetalverbrückte Harzkomponente (C) ein Molekulargewicht im Bereich von 2000 - 20.000 g/mol, bevorzugt 2000 - 8000 g/mol aufweist, wobei das Molekulargewicht nach ISO 16014-2 bestimmt ist.

12. Zusammensetzung nach einem der vorhergehenden Ansprüche, **dadurch gekennzeichnet, dass** die polyacetalverbrückte Harzkomponente (C) in der Zusammensetzung in einem Anteil von mindestens 40 Gew.-% vorliegt, besonders bevorzugt mindestens 50 Gew.-%, jeweils bezogen auf das Gesamtgewicht der Zusammensetzung.

13. Zusammensetzung nach einem der vorhergehenden Ansprüche, **dadurch gekennzeichnet, dass** die Zusammensetzung ferner einen Beschleuniger (D) aus der Gruppe der Treibmittel und organischen Säuren umfasst.

14. Zusammensetzung nach einem der vorhergehenden Ansprüche, **dadurch gekennzeichnet, dass** die Zusammensetzung die folgenden Komponenten umfasst oder daraus besteht, jeweils bezogen auf das Gesamtgewicht der Zusammensetzung:
1 bis 70 Gew.-% der mindestens einen härtbaren Harzkomponente (A);
0,001 bis 70 Gew.-% des mindestens einen Härters und/oder des mindestens einen Initiators (B) für die Polymerisation der härtbaren Harzkomponente (A);
20 bis 95 Gew.-% der mindestens einen Polyacetal-verbrückten Harzkomponente (C);
0 bis 15 Gew.-% eines Beschleunigers (D) für die hydrolytische Spaltung von Polyacetalen;
0 bis 70 Gew.-% weitere Additive (E) aus der Gruppe der Füllstoffe, Farbstoffe, Pigmente, Alterungsschutzmittel, Fluoreszenzmittel, Stabilisatoren, Polymerisationsbeschleuniger, Sensibilisatoren, Haftvermittler, Trockenmittel, Vernetzer, Fließverbesserer, Benetzungsmittel, Thixotropierungsmittel, reaktiven und nicht-reaktiven Verdünnungsmittel, Flexibilisierer, polymeren Verdickungsmittel, Flammschutzmittel, Korrosionsinhibitoren, Weichmacher, Tackyfier und Kombinationen davon.

15. Verfahren zum Herstellen und Wiederauflösen eines Fügeverbundes, eines Vergusses, einer Stützstruktur oder einer Beschichtung, bei dem
a) eine Zusammensetzung gemäß einem der vorhergehenden Ansprüche auf ein erstes Substrat aufgebracht und die Zusammensetzung wahlweise mit wenigstens einem weiteren Substrat unter Bildung einer Klebefuge in Kontakt gebracht wird;
b) die Zusammensetzung unter Einwirkung von Wärme und/oder Licht gehärtet wird, wodurch ein gehärteter Fügeverbund, ein gehärteter Verguss, eine gehärtete Stützstruktur oder eine gehärtete Beschichtung gebildet wird; und
c) Feuchtigkeit auf die gehärtete Zusammensetzung einwirken gelassen wird während einer vorbestimmten Zeitdauer und bei einer vorbestimmten Temperatur, wodurch die gehärtete Zusammensetzung aufgelöst und/oder von dem ersten und wahlweise dem zweiten Substrat abgelöst wird.

16. Verwendung der Zusammensetzung gemäß einem der Ansprüche 1 bis 14 für auf- und wiederlösbare Verklebungen, Beschichtungen und Vergüsse, insbesondere als temporäres Stützmaterial für additiv gefertigte Strukturen.

## Claims

1. A curable composition that is liquid at room temperature, the composition comprising:
A) at least one curable resin component selected from the group consisting of epoxy-containing compounds, oxetanes, vinyl ethers, (meth)acrylates and combinations thereof;
B) at least one curing agent and/or one initiator for the polymerization of the curable resin component; and
C) at least one polyacetal-bridged resin component that is obtainable by reacting at least one at least difunctional vinyl ether (c1) with at least one at least difunctional alcohol (c2) to form a polyacetal intermediate product having more than two terminal vinyl ether groups or more than two terminal hydroxyl groups, and
a) reacting the polyacetal intermediate product having more than two terminal vinyl ether groups with at least one compound of mixed functionality (c3) having at least one hydroxyl group or one amine group and at least one further functional group of resin component (A) or a group that can be polymerized therewith; or
b) reacting the polyacetal intermediate product having more than two terminal hydroxyl groups with a hydroxyl group-reactive linker and further reacting it with the compound of mixed functionality (c3) or a difunctional resin component (A); or
c) reacting the polyacetal intermediate product having more than two terminal hydroxyl groups with a compound of mixed functionality (c3) having at least one isocyanate group and a further functional group of resin component (A) or a group that can be polymerized therewith, and
wherein the polyacetal-bridged resin component (C) is present in the composition in a proportion of at least 20 wt.%, based on the total weight of the composition.

2. The composition according to claim 1, **characterized in that** the reaction of the at least difunctional vinyl ether (c1) with the at least difunctional alcohol (c2) and the at least one compound of mixed functionality (c3) is performed in a single-stage synthesis.

3. The composition according to claim 1 or 2, **characterized in that** the resin component (A) comprises an epoxy-containing compound and/or an oxetane, and **in that** the composition comprises a curing agent (B1) selected from the group of amines and/or anhydrides.

4. The composition according to claim 1 or 2, **characterized in that** the resin component (A) comprises an epoxy-containing compound, an oxetane and/or a vinyl ether, and **in that** the composition comprises an initiator for cationic polymerization.

5. The composition according to any of the preceding claims, **characterized in that** the resin component (A) comprises a radically curable (meth)acrylate compound, and **in that** the composition comprises an initiator for radical polymerization.

6. The composition according to claim 1 or 2, **characterized in that** the resin component (A) comprises an epoxy-containing compound and/or an oxetane as well as a radiation-curable compound, or comprises a hybrid compound having epoxy groups and radiation-curable groups, and **in that** the composition comprises a curing agent from the group of amines and/or anhydrides as well as additionally an initiator for radical polymerization.

7. The composition according to any of the preceding claims, **characterized in that** the at least difunctional vinyl ether (c1) is selected from the group consisting of aliphatic, cycloaliphatic, aromatic vinyl ethers and combinations thereof, wherein the vinyl ether is preferably a polar vinyl ether with a functionality of two to four, more preferably that the vinyl ether is selected from diethylene glycol divinyl ether (DVE-2), triethylene glycol divinyl ether (DVE-3), 1,4-butanediol divinyl ether (BDDVE), 1,4-cyclohexanedimethanol divinyl ether (CHDM-di), 1,2,3-tris(vinyloxy)propane, trimethylpropane trivinyl ether, 1,3,5-tris[(2-vinyloxy)ethoxy]benzene, tris[4-(vinyloxy)butyl]1,2,4-benzene tricarboxylate, 1,3,5-tris(2-vinyloxyethyl)-1,3,5-triazine, 1,3,5-cyclohexanetrimethanol trivinyl ether, 1,1,1-tris-4-[2-(vinyloxy)ethoxy]phenylethane, tetrakis(vinyloxymethyl)methane, and combinations thereof.

8. The composition according to any of the preceding claims, **characterized in that** the at least difunctional alcohol is selected from the group consisting of primary and secondary aliphatic, cycloaliphatic and aromatic alcohols and combinations thereof, wherein preferably the alcohol has a functionality of two to five, and more preferably that the alcohol is selected from dipropyleneglycol, 1,1,1-trimethylolpropane, glycerol, 1,2,6-hexanetriol, 2,6-bis(hydroxymethyl)-p-cresol, pyrogallol, phloroglucinol, pentaerythritol, ribose, arabinose, xylose, lyxose, ribulose, xylulose and combinations thereof.

9. The composition according to any of the preceding claims, **characterized in that** the further functional group of the compound of mixed functionality (c3) comprises an epoxy group, a (meth)acrylate group and combinations thereof.

10. The composition according to any of the preceding claims, **characterized in that** the compound of mixed functionality (c3) is selected from glycidol, pre-extended epoxy resins, 1-(oxirane-2-yl)ethane-1-ol, 2-(oxirane-2-yl)ethane-1-ol, 2-(oxirane-2-yl)-1-phenylethane-1-ol, 2-[(oxirane-2-yl)methoxy]ethane-1-ol, 3-ethyl-3-(hydroxymethyl)oxetane, 2-hydroxyethyl acrylate, 4-hydroxybutyl acrylate, hydroxyethylhexyl acrylate, hydroxyisobutyl acrylate, 2-hydroxymethyl acrylate, hydroxyethylhexyl methacrylate, 2-hydroxyethyl vinyl ether, hydroxybutyl vinyl ether (HBVE), diethyleneglycol vinyl ether, triethyleneglycol vinyl ether, 1,4-cyclohexanedimethanol vinyl ether, 3-aminopropyl vinyl ether (APVE) and combinations thereof.

11. The composition according to any of the preceding claims, **characterized in that** the polyacetal-bridged resin component (C) has a molecular weight in the range of 2000 - 20,000 g/mol, preferably 2000 - 8000 g/mol, the molecular weight being determined according to ISO 16014-2.

12. The composition according to any of the preceding claims, **characterized in that** the polyacetal-bridged resin component (C) is present in the composition in a proportion of at least 40 wt.%, particularly preferably at least 50 wt.%, each based on the total weight of the composition.

13. The composition according to any of the preceding claims, **characterized in that** the composition further comprises an accelerator (D) from the group of blowing agents and organic acids.

14. The composition according to any of the preceding claims, **characterized in that** the composition comprises or consists of the following components, each based on the total weight of the composition:
1 to 70 wt.% of the at least one curable resin component (A);
0.001 to 70 wt.% of the at least one curing agent and/or the at least one initiator (B) for the polymerization of the curable resin component (A);
20 to 95 wt.% of the at least one polyacetal-bridged resin component (C);
0 to 15 wt.% of an accelerator (D) for the hydrolytic cleavage of polyacetals;
0 to 70 wt.% of further additives (E) from the group of fillers, dyes, pigments, anti-aging agents, fluorescent agents, stabilizers, polymerization accelerators, sensitizers, adhesion promoters, desiccants, crosslinking agents, flow improvers, wetting agents, thixotropic agents, reactive and non-reactive diluents, flexibilizers, polymeric thickeners, flame retardants, corrosion inhibitors, plasticizers, tackifiers and combinations thereof.

15. A method of forming and re-dissolving a joint connection, an encapsulation, a support structure or a coating, in which
a) a composition according to any of the preceding claims is applied to a first substrate, and the composition is optionally brought into contact with at least one further substrate to form an adhesive joint;
b) the composition is cured by exposure to heat and/or light, whereby a cured joint connection, a cured encapsulation, a cured support structure or a cured coating is formed; and
c) the cured composition is exposed to moisture for a predetermined period of time and at a predetermined temperature, whereby the cured composition is dissolved and/or detached from the first and optionally from the second substrate.

16. Use of the composition according to any of claims 1 to 14 for dissolvable and detachable adhesive bonds, coatings and encapsulations, in particular as a temporary support material for additively manufactured structures.

## Revendications

1. Composition durcissable qui est liquide à température ambiante, la composition comprenant :
A) au moins un composant résineux durcissable choisi dans le groupe constitué de composés contenant de l'époxydes, d'oxétanes, d'éthers vinyliques, de (méth)acrylates et de leurs combinaisons,
B) au moins un durcisseur et/ou un initiateur pour la polymérisation du composant résineux durcissable, et
C) au moins un composant résineux à pont de polyacétal, apte à être obtenu par réaction d'au moins un éther vinylique au moins difonctionnel (c1) avec au moins un alcool au moins difonctionnel (c2) pour former un produit intermédiaire de polyacétal comportant plus de deux groupes d'éther vinyliques terminaux ou plus de deux groupes hydroxyle terminaux, et
a) la réaction du produit intermédiaire polyacétal qui comprend plus de deux groupes d'éther vinylique terminaux, avec au moins un composé à fonctions mixtes (c3) qui présente au moins un groupe hydroxyle ou un groupe amine ainsi qu'au moins un groupe fonctionnel supplémentaire du composant résineux (A) ou un groupe polymérisable avec celui-ci, ou
b) la réaction du produit intermédiaire polyacétal qui comprend plus de deux groupes hydroxyle terminaux, avec un lieur réactif vis-à-vis des groupes hydroxyle, puis la réaction supplémentaire avec le composé à fonctions mixtes (c3) ou un composant résineux difonctionnel (A), ou
c) la réaction du produit intermédiaire polyacétal qui comprend plus de deux groupes hydroxyle terminaux, avec un composé à fonctions mixtes (c3) comprenant au moins un groupe isocyanate et un groupe fonctionnel supplémentaire du composant résineux (A) ou un groupe polymérisable avec celui-ci, et
le composant résineux à pont de polyacétal (C) étant présent dans la composition en une proportion d'au moins 20 % en poids par rapport au poids total de la composition.

2. Composition selon la revendication 1, **caractérisée en ce que** la réaction de l'éther vinylique au moins difonctionnel (c1) avec l'alcool au moins difonctionnel (c2) et ledit au moins un composé à fonctions mixtes (c3) est réalisée dans une synthèse à une étape.

3. Composition selon la revendication 1 ou 2, **caractérisée en ce que** le composant résineux (A) comprend un composé contenant de l'époxyde et/ou un oxétane, et **en ce que** la composition comprend un durcisseur (B1) du groupe des amines et/ou des anhydrides.

4. Composition selon la revendication 1 ou 2, **caractérisée en ce que** le composant résineux (A) comprend un composé contenant de l'époxyde, un oxétane et/ou un éther vinylique, et **en ce que** la composition comprend un initiateur pour la polymérisation cationique.

5. Composition selon l'une des revendications précédentes, **caractérisée en ce que** le composant résineux (A) comprend un composé (méth)acrylate durcissable par voie radicalaire, et **en ce que** la composition comprend un initiateur pour la polymérisation radicalaire.

6. Composition selon la revendication 1 ou 2, **caractérisée en ce que** le composant résineux (A) comprend un composé contenant de l'époxyde et/ou un oxétane ainsi qu'un composé durcissable par rayonnement, ou comprend un composé hybride présentant des groupes époxyde et des groupes durcissables par rayonnement, et **en ce que** la composition comprend un durcisseur du groupe des amines et/ou des anhydrides et en plus un initiateur pour la polymérisation radicalaire.

7. Composition selon l'une des revendications précédentes, **caractérisée en ce que** l'éther vinylique au moins difonctionnel (c1) est choisi dans le groupe constitué d'éthers vinyliques aliphatiques, cycloaliphatiques, aromatiques et de leurs combinaisons, l'éther vinylique étant de préférence un éther vinylique polaire à fonctionnalité de deux à quatre, et de manière plus préférée, **en ce que** l'éther vinylique est choisi parmi l'éther divinylique de diéthylèneglycol (DVE-2), l'éther divinylique de triéthylèneglycol (DVE-3), l'éther divinylique de 1,4-butanediol (BDDVE), l'éther divinylique de 1,4-cyclohexanediméthanol (CHDM-di), le 1,2,3-tris(vinyloxy)propane, l'éther trivinylique de triméthylpropane, le 1,3,5-tris[(2-vinyloxy)éthoxy]benzol, le tris[4-(vinyloxy)butyl] 1,2,4-benzènetricarboxylates, le 1,3,5-tris(2-vinyloxyéthyl)-1,3,5-triazine, l'éther trivinylique de 1,3,5-cyclohexantriméthanol, le 1,1,1-tris-4-[2-(vinyloxy)éthoxy]phényléthane, le tétrakis(vinyloxyméthyl)méthane et les combinaisons de ceux-ci.

8. Composition selon l'une des revendications précédentes, **caractérisée en ce que** l'alcool au moins difonctionnel est choisi dans le groupe constitué des alcools primaires et secondaires, aliphatiques, cycloaliphatiques et aromatiques ainsi des combinaisons de ceux-ci, l'alcool présentant de préférence une fonctionnalité de deux à cinq, et de manière plus préférée, **en ce que** l'alcool est choisi parmi le dipropylène glycol, le 1,1,1-triméthylolpropane, la glycérine, le 1,2,6-hexantriol, le 2,6-bis(hydroxyméthyl)-p-crésol, le pyrogallol, le phloroglucinol, le pentaérythritol, le ribose, l'arabinose, le xylose, le lyxose, le ribulose, le xylulose et les combinaisons de ceux-ci.

9. Composition selon l'une des revendications précédentes, **caractérisée en ce que** le groupe fonctionnel supplémentaire du composé à fonctions mixtes (c3) comprend un groupe époxyde, un groupe (méth)acrylate et des combinaisons de ceux-ci.

10. Composition selon l'une des revendications précédentes, **caractérisée en ce que** le composé à fonctions mixtes (c3) est choisi parmi le glycidol, les résines époxy pré-allongées, le 1-(oxirane-2-yl)éthan-1-ol, le 2-(oxirane-2-yl)éthan-1-ol, le 2-(oxirane-2-yl)-1-phényléthan-1-ol, le 2-[(oxirane-2-yl)méthoxy]éthan-1-ol, le 3-éthyl-3-(hydroxyméthyl)oxétane, l'acrylate de 2-hydroxyéthyle, l'acrylate de 4-hydroxybutyle, l'acrylate d'hydroxyéthylhexyle, l'acrylate d'hydroxyisobutyle, l'acrylate de 2-hydroxyméthyle, le méthacrylate d'hydroxyéthylhexyle, l'éther vinylique de 2-hydroxyéthyle, l'éther vinylique d'hydroxybutyle (HBVE), l'éther vinylique de diéthylèneglycol, l'éther vinylique de triéthylèneglycol, l'éther vinylique de 1,4-cyclohexanediméthanol, l'éther vinylique de 3-aminopropyle (APVE) et les combinaisons de ceux-ci.

11. Composition selon l'une des revendications précédentes, **caractérisée en ce que** le composant résineux à pont de polyacétal (C) présente un poids moléculaire compris dans la plage de 2000 à 20 000 g/mol, de préférence de 2000 à 8000 g/mol, le poids moléculaire étant déterminé selon ISO 16014-2.

12. Composition selon l'une des revendications précédentes, **caractérisée en ce que** le composant résineux à pont de polyacétal (C) est présent dans la composition en une proportion d'au moins 40 % en poids, de manière particulièrement préférée d'au moins 50 % en poids, respectivement par rapport au poids total de la composition.

13. Composition selon l'une des revendications précédentes, **caractérisée en ce que** la composition comprend en outre un accélérateur (D) du groupe des agents gonflants et des acides organiques.

14. Composition selon l'une des revendications précédentes, **caractérisée en ce que** la composition comprend ou est composée des composants suivants, chacun par rapport au poids total de la composition :
1 à 70 % en poids dudit au moins un composant résineux durcissable (A),
0,001 à 70 % en poids dudit au moins un durcisseur et/ou dudit au moins un initiateur (B) pour la polymérisation du composant résineux durcissable (A),
20 à 95 % en poids dudit au moins un composant résineux à pont de polyacétal (C),
0 à 15 % en poids d'un accélérateur (D) pour le clivage hydrolytique de polyacétals,
0 à 70 % en poids d'additifs (E) supplémentaires choisis dans le groupe des charges, des colorants, des pigments, des agents anti-vieillissement, des agents fluorescents, des stabilisants, des accélérateurs de polymérisation, des sensibilisateurs, des agents adhésifs, des dessiccants, des agents de réticulation, des agents d'amélioration d'écoulement, des agents mouillants, des agents thixotropiques, des diluants réactifs et non réactifs, des agents flexibilisants, des épaississants polymères, des agents ignifuges, des inhibiteurs de corrosion, des plastifiants, des agents tackifiants et des combinaisons de ceux-ci.

15. Procédé de fabrication et de dissolution d'une liaison d'assemblage, d'un moulage, d'une structure de support ou d'un revêtement, dans lequel
a) une composition selon l'une des revendications précédentes est appliquée sur un premier substrat et la composition est facultativement mise en contact avec au moins un autre substrat en formant un joint adhésif,
b) la composition est durcie sous l'effet de chaleur et/ou de lumière, formant ainsi une liaison d'assemblage durcie, un moulage durci, une structure de support durcie ou un revêtement durci, et
c) de l'humidité agit sur la composition durcie pendant une durée prédéterminée et à une température prédéterminée, grâce à quoi la composition durcie est dissolue et/ou est détachée du premier et, facultativement, du deuxième substrat.

16. Utilisation de la composition selon l'une des revendications 1 à 14 pour des collages, des revêtements et des moulages solubles et re-détachables, en particulier en tant que matériau de support temporaire pour des structures fabriquées de manière additive.
